(19) Europäisches Patentamt / European Patent Office / Office européen des brevets

(11) **EP 4 224 950 A1**

(12) **EUROPEAN PATENT APPLICATION**
published in accordance with Art. 153(4) EPC

(43) Date of publication:
**09.08.2023 Bulletin 2023/32**

(21) Application number: **21874540.4**

(22) Date of filing: **29.09.2021**

(51) International Patent Classification (IPC):
**H04W 52/24** (2009.01)

(52) Cooperative Patent Classification (CPC):
**H04W 24/00; H04W 52/02; H04W 52/24; H04W 52/38;** Y02D 30/70

(86) International application number:
**PCT/CN2021/121770**

(87) International publication number:
**WO 2022/068885 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 CN 202011065169**

(71) Applicant: **Vivo Mobile Communication Co., Ltd.
Dongguan, Guangdong 523863 (CN)**

(72) Inventors:
• ZENG, Yu
 Dongguan, Guangdong 523863 (CN)
• JI, Zichao
 Dongguan, Guangdong 523863 (CN)
• WANG, Huan
 Dongguan, Guangdong 523863 (CN)
• LIU, Siqi
 Dongguan, Guangdong 523863 (CN)
• LIU, Shixiao
 Dongguan, Guangdong 523863 (CN)

(74) Representative: **Lavoix
Bayerstraße 83
80335 München (DE)**

(54) **POWER CONTROL METHOD AND APPARATUS, AND TERMINAL DEVICE**

(57) Embodiments of this application disclose a power control method and apparatus and a terminal device, and pertain to the field of communication technologies. The power control method of this application includes: obtaining a first path loss, where the first path loss is determined based on a sidelink SL path loss, or the first path loss is determined based on the SL path loss and a downlink DL path loss; and controlling a transmit power of a target transmission on a sidelink based on the first path loss.

EP 4 224 950 A1

```
                    ┌──────────┐
                    │  Start   │
                    └────┬─────┘
                         │
   ┌─────────────────────┴──────────────────────┐
   │ Obtain a first path loss, where the first   │
   │ path loss is determined based on a          │──  201
   │ sidelink SL path loss, or the first path    │
   │ loss is determined based on the SL path     │
   │ loss and a downlink DL path loss            │
   └─────────────────────┬──────────────────────┘
                         │
   ┌─────────────────────┴──────────────────────┐
   │ Control a transmit power of a target        │──  202
   │ transmission on a sidelink based on the     │
   │ first path loss                             │
   └─────────────────────┬──────────────────────┘
                         │
                    ┌────┴─────┐
                    │   End    │
                    └──────────┘
```

FIG. 2

**Description**

**CROSS-REFERENCE TO RELATED APPLICATIONS**

This application claims priority to Chinese Patent Application No. 202011065169.7, filed on September 30, 2020 in China, which is incorporated herein by reference in its entirety.

TECHNICAL FIELD

The present invention relates to the field of communication technologies, and in particular, to a power control method and apparatus and a terminal device.

**BACKGROUND**

In new radio (New Radio, NR) vehicle to X (vehicle to X, V2X), user equipment (User Equipment, UE, also referred to as terminal) can control a transmit power of a physical sidelink feedback channel (Physical SideLink Feedback Channel, PSFCH) based only on a path loss between a base station and the user. However, such power control manner may not match a current communication scenario (for example, a unicast and/or groupcast scenario). In addition, in the case of simultaneous transmission of multiple PSFCHs, controlling power based on the path loss between a base station and a user has low power control accuracy.

**SUMMARY**

Embodiments of this application provide a power control method and apparatus and a terminal device, to resolve a problem of low power control accuracy in an SL transmission scenario.

According to a first aspect, a power control method is provided, applied to a first terminal device and including:

obtaining a first path loss, where the first path loss is determined based on a sidelink SL path loss, or the first path loss is determined based on the SL path loss and a downlink DL path loss; and
controlling a transmit power of a target transmission on a sidelink based on the first path loss.

According to a second aspect, a power control apparatus is provided, applied to a first terminal device and including:

a first obtaining module, configured to obtain a first path loss, where the first path loss is determined based on a sidelink SL path loss, or the first path loss is determined based on the SL path loss and a downlink DL path loss; and
a control module, configured to control a transmit power of a target transmission on a sidelink based on the first path loss.

According to a third aspect, a terminal device is provided. The terminal device includes a processor, a memory, and a program or instructions stored in the memory and capable of running on the processor, where when the program or instructions are executed by the processor, the steps of the method according to the first aspect are implemented.

According to a fourth aspect, a readable storage medium is provided. The readable storage medium stores a program or instructions, and when the program or instructions are executed by a processor, the steps of the method according to the first aspect are implemented.

According to a fifth aspect, a chip is provided. The chip includes a processor and a communication interface, where the communication interface is coupled to the processor, and the processor is configured to run a program or instructions to implement the method according to the first aspect.

In the embodiments of this application, the first path loss is obtained, where the first path loss is determined based on the sidelink SL path loss, or the first path loss is determined based on the SL path loss and the downlink DL path loss; and the transmit power of the target transmission on the sidelink is controlled based on the first path loss. In the embodiments of this application, the transmit power of the target transmission on the sidelink can be controlled based on the SL path loss, for example, in the case of unicast, a power is calculated based on an SL path loss between users, so that a power control manner matches a current communication scenario. This can improve power control accuracy in an SL transmission scenario and avoid additional transmit power overheads, thereby saving energy.

**BRIEF DESCRIPTION OF DRAWINGS**

FIG. 1 is a structural diagram of a network system to which the embodiments of this application are applicable;
FIG. 2 is a schematic flowchart of a power control method according to an embodiment of this application;
FIG. 3 is a schematic flowchart of a power control apparatus according to an embodiment of this application;
FIG. 4 is a structural block diagram of a communication device according to an embodiment of this application; and
FIG. 5 is a structural block diagram of a terminal device according to an embodiment of this application.

**DESCRIPTION OF EMBODIMENTS**

The following clearly and completely describes the technical solutions in the embodiments of this application with reference to the accompanying drawings in the embodiments of this application. It is clear that the described embodiments are only some but not all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, the objects distinguished by "first" and "second" usually belong to one category, and the number of objects is not limited. For example, there may be one or more first objects. In addition, in the specification and claims, "and/or" represents at least one of connected objects, and the symbol "/" typically represents an "or" relationship between the associated objects.

It should be noted that the technologies described in the embodiments of this application are not limited to long term evolution (Long Term Evolution, LTE)/LTE-Advanced (LTE-Advanced, LTE-A) systems, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to applications other than an NR system application, for example, a 6th generation (6th Generation, 6G) communication system.

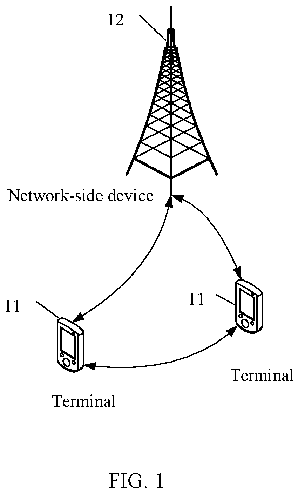

FIG. 1 is a structural diagram of a wireless communication system to which the embodiments of this application are applicable. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a band, an earphone, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

To enable persons skilled in the art to better understand the embodiments of this application, the following description is provided.

1. PSFCH power control technology

(1) In a case that a parameter p0-DL-PSFCH is provided for UE,

(a) UE calculates an intermediate quantity $P_{PSFCH, one}$ based on a path loss PL between a base station and a user and p0-DL-PSFCH; and
(b) UE obtains transmission powers $P_{PSFCH,k}(i)$ of a PSFCH under different conditions based on a value relationship between the number of scheduled PSFCH transmissions $N_{sch,Tx,PSFCH}$ and the maximum number of PSFCH transmissions $N_{max,PSFCH}$ supported by the UE. Specific classifications are as follows:

$$N_{sch,Tx,PSFCH} \leq N_{max,PSFCH}, \quad P_{PSFCH, one} + 10\log_{10}(N_{sch,Tx,PSFCH}) \leq P_{CMAX};$$

$$N_{Tx,PSFCH} \geq \max(1, \sum_{i=1}^{K} M_i) M_i, \quad P_{PSFCH, one} + 10\log_{10}(N_{sch,Tx,PSFCH}) \succ P_{CMAX};$$

$$N_{sch,Tx,PSFCH} \succ N_{max,PSFCH}, \quad P_{PSFCH, one} + 10\log_{10}(N_{sch,Tx,PSFCH}) \leq P_{CMAX};$$

and

$$N_{sch,Tx,PSFCH} \succ N_{max,PSFCH}, \quad P_{PSFCH, one} + 10\log_{10}(N_{sch,Tx,PSFCH}) \leq P_{CMAX};$$

where $P_{CMAX}$ is a maximum output power configured for the UE.

(2) In a case that a parameter p0-DL-PSFCH is not provided for UE,

$$P_{PSFCH,k}(i) = P_{CMAX} - 10\log_{10}(N_{Tx,PSFCH}),$$

where
$P_{CMAX}$ is a maximum output power configured for the UE.

2. Sidelink (Sidelink, SL) HARQ feedback

To improve reliability and effectiveness of sidelink transmission, SL HARQ is introduced into NR V2X. On an SL, a transmit node sends data or a transport block (Transport Block, TB) to a receive node, and the receive node determines whether the data is successfully received. If the data is successfully received, the receive node feeds back an ACK to the transmit node; otherwise, feeds back a NACK. Transmission of the ACK or NACK takes place on a corresponding PSFCH resource (that is, a corresponding PSFCH).

UE transmits a PSFCH carrying HARQ-ACK information on one or more sub-channels (sub-channel) in response to PSSCH reception. The UE obtains a PSFCH resource periodicity by using a parameter such as period PSFCH resource (periodPSFCHresource), where a parameter value N = 0/1/2/4 slots. When the parameter value is 0, the UE transmits no PSFCH.

If the UE has received a physical sidelink shared channel (Physical SideLink Shared Channel, PSSCH) in a resource pool, and sidelink control information (Sidelink Control Information, SCI) format 0_2 scheduling the PSSCH reception indicates that the UE is to report HARQ-ACK information, the UE has the HARQ-ACK information carried on a resource for PSFCH transmission. A processing delay between the last slot for reception of PSSCH data by the UE and a slot for transmission of a corresponding PSFCH is obtained through a parameter MinTimeGapPSFCH, with a value k = 2 or 3 slots.

Resource blocks (Resource Block, RB) for PSFCH transmission in a resource pool are classified based on slot indexes and sub-channel indexes. Two mapping manners are present between a PSSCH and a corresponding PSFCH feedback resource.

Manner 1: HARQ-ACK information is transmitted only on a PSFCH resource corresponding to an initial sub-channel in sub-channels occupied by PSSCH data.

Manner 2: HARQ-ACK information is transmitted on PSFCH resources corresponding to all sub-channels occupied by PSSCH data.

The UE determines resource indexes for PSFCH transmission according to a receive ID and a transmit ID. Cyclic shift pairs are introduced, that is, code division technology is used for expanding resources for PSFCH transmission.

3. Sidelink

Starting from Release 12, a long term evolution (Long Term Evolution, LTE) system supports a sidelink for direct data transmission between UEs without using a network device.

UE sends SCI over a physical sidelink control channel (Physical Sidelink Control Channel, PSCCH) to schedule transmission of a physical sidelink shared channel (Physical Sidelink Shared Channel, PSSCH) for sending data. Such transmission is performed in a form of broadcast. A receive end does not feed back whether reception is successful or not to a transmit end.

LTE sidelink is designed to support two resource allocation modes: a scheduled resource allocation mode (typically referred to as mode-1) and an autonomous resource selection mode. In the former mode, a resource is allocated to each UE under control of a network-side device. In the latter mode, the UE autonomously selects a resource.

Starting from Release 15, LTE supports sidelink carrier aggregation (Carrier Aggregation, CA). Different from CA on Uu interface (that is, downlink and uplink), CA on LTE sidelink does not differentiate between a primary component carrier (Primary component carrier, PCC) and a secondary component carrier (Secondary component carrier, SCC). The UE in the autonomous resource selection mode independently performs resource sensing and resource reservation on each CC.

LTE sidelink is designed to be applicable to specific public safety affairs (for example, emergency communication on a fire site or a disaster site such as an earthquake), vehicle to everything (vehicle to everything, V2X) communication, or the like. Vehicle to everything communication includes various services, for example, basic safety communication, advanced driving (self-driving), platooning, and sensor extension. LTE sidelink supports only broadcast communication, and therefore is mainly used for basic safety communication. Other advanced V2X services are supported by NR sidelink.

A 5G NR system may be used in a working band above 6 GHz that is not supported by LTE, and supports a larger working bandwidth. The NR system also supports sidelink interface communication for direct communication between terminals.

Sidelink transmission is mainly divided into the following transmission modes: broadcast, groupcast, and unicast. Unicast, as its name implies, is a one-to-one transmission. Groupcast is a one-to-many transmission. Broadcast is also a one-to-many transmission, however, in broadcast, there is no concept that UEs belong to a same group.

On a sidelink, the PSCCH carries SCI that is used for scheduling the PSSCH. The SCI may indicate transmission resources, and such resources are reserved for future transmissions. A PSFCH is used to feed back sidelink HARQ-ACK information. After determining sidelink HARQ information, a user can further transmit the sidelink HARQ information to a base station over a PUCCH or PUSCH.

4. Cast type and HARQ feedback mode

NR sidelink supports broadcast, groupcast, and unicast transmission modes. Groupcast of NR sidelink supports use cases: connection-based groupcast and connectionless groupcast, where the connection-based groupcast means that a connection is established between UEs in groupcast, and the connectionless mode refers to a scenario in which a groupcast UE does not know other UEs in one group and no connection is established therebetween. In a case of groupcast, a plurality of receive ends support two mechanisms in performing HARQ feedback:

Mechanism 1 (NACK only feedback or connectionless mechanism): If data is received but cannot be decoded, NACK is fed back. No feedback is provided in other cases. In such case, if a transmitting party receives no NACK, all the receive ends are considered to have successfully received and decoded the data. However, this mechanism has one disadvantage: a transmitting party may confuse successful reception of data with unsuccessful reception of SCI by the receiving party. That is, although the receiving party has failed in reception of the SCI and data, the transmitting party assumes that the receiving party has successfully received the SCI and data. This manner is applicable to a connectionless groupcast scenario.

Mechanism 2 (ACK/NACK feedback or connection-based mechanism connection-based): If data is received but cannot be decoded, or SCI is received but no data is received, NACK is fed back; if data is received and decoded correctly, ACK is fed back. In this case, if a transmitting party receives NACK transmitted from one receive end user or receives no ACK or NACK, the transmitting party assumes that transmission to the user has failed; if the transmitting party receives ACK transmitted from one receive end, the transmitting party assumes that transmission to the user is successful. This manner is applicable to a connection-based groupcast scenario.

In related technologies, UE can control a transmit power of a physical sidelink feedback channel PSFCH based only on a path loss between a base station and a user. However, such power control manner may not match a current communication scenario (such as a unicast and/or groupcast scenario), resulting in low power control accuracy and additional transmit power overheads.

The following specifically describes the power control method provided in the embodiments of this application through specific embodiments and application scenarios thereof with reference to the accompanying drawings.

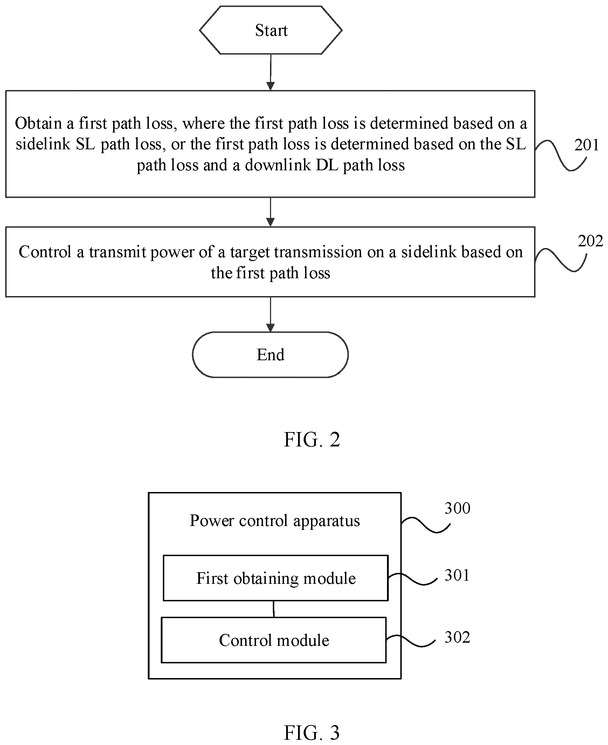

As shown in FIG. 2, an embodiment of this application provides a power control method which is implemented by a first terminal device. The method includes the following steps.

Step 201. Obtain a first path loss, where the first path loss is determined based on a sidelink SL path loss, or the first path loss is determined based on the SL path loss and a downlink DL path loss.

In this embodiment of this application, according to communication scenarios, the first path loss used for controlling a transmit power of a target transmission on a sidelink can be selected based on the SL path loss and DL path loss. For example, in the case of unicast, a power is calculated based on an SL path loss between users.

Step 202. Control a transmit power of a target transmission on a sidelink based on the first path loss.

In this step, the target transmission may be a feedback, an SSB, a discovery signal, data, a control or reference signal (Reference Signal, RS), or the like. The controlling a transmit power of a target transmission may be understood as calculating the transmit power of the target transmission.

In this embodiment of this application, the first path loss is obtained, where the first path loss is determined based on the sidelink SL path loss, or the first path loss is determined based on the SL path loss and the downlink DL path loss; and the transmit power of the target transmission on the sidelink is controlled based on the first path loss. In this embodiment of this application, the transmit power of the target transmission on the sidelink can be controlled based on the SL path loss, for example, in the case of unicast, a power is calculated based on an SL path loss between users, so that a power control manner matches a current communication scenario. This can improve accuracy of power control in an SL transmission scenario and avoid additional transmit power overheads, thereby saving energy.

Optionally, the sidelink SL path loss is obtained by at least one of the following:

calculating the SL path loss based on a reference signal received power RSRP;
determining the SL path losses based on at least part of path losses transmitted by a second terminal device, where the second terminal device is a terminal device that communicates with the first terminal device;
determining the SL path loss based on a path loss notified of by a third terminal device, where the third terminal device is a scheduling terminal or a header user, for example, the header user is a head of a fleet, and the header user can manage a user group and/or assist in scheduling users in the user group for SL communication, in addition to having the communication functions of a common user;
obtaining the SL path loss according to protocol specifications;
determining the SL path loss based on a path loss configured for a base station; and
determining the SL path loss based on a pre-configured path loss.

Further optionally, the calculating the SL path loss based on a reference signal received power RSRP includes:

calculating the SL path loss based on at least part of RSRPs transmitted by the second terminal device; or
calculating the SL path loss based on an RSRP measured by the first terminal device and at least part of transmit powers of the second terminal device, where
the transmit power of the second terminal device is pre-configured; or
the transmit power of the second terminal device is transmitted by the second terminal device to the first terminal device, for example, the transmit power is carried or indicated by a PSSCH, a PSCCH, SCI, or an RS; or
the transmit power of the second terminal device is notified by the third terminal device to the first terminal device.

The following describes a process of calculating the first path loss with reference to specific communication scenarios.

Unicast scenario:

Method 1: At least part of users in a unicast transmission relationship with a first user transmit RSRP values measured by these users to the first user, and the first user separately calculates a path loss corresponding to each transmission:

$$PL\_SL\_uni1(m) = Pt\_uni1(m) - RSRP\_uni1(m);$$

where
RSRP_*uni*1(m) represents an RSRP value measured by a user m in a unicast relationship with the first user, Pt_*uni*1(m) represents a transmit power of the first user, and *PL_SL_uni*1(m) represents a path loss between the first user and the user m.

Method 2: The first user performs RSRP measurement to obtain RSRP of transmission information of at least part of users in a unicast transmission relationship with the first user, and separately calculates a path loss corresponding to each transmission based on transmit powers of at least part of users communicating with the first user:

$$PL\_SL\_uni2(m) = Pt\_uni2(m) - RSRP\_uni2(m);$$

where
RSRP_*uni*2(m) represents an RSRP value measured by a user m in a unicast relationship with the first user, Pt_*uni*2(m) represents a transmit power of the user m, and *PL_SL_unit*2(m) represents a path loss between the first user and the user m.

Groupcast scenario:

Method 1 (applicable to the foregoing mechanism 2): At least part of users in a groupcast transmission relationship with the first user separately transmit RSRP values measured by these users to the first user, and the first user separately calculates a path loss corresponding to each transmission:

$$PL\_SL\_group1(m) = Pt\_group1(m) - RSRP\_group1(m);$$

where
RSRP_*group*1(m) represents an RSRP value measured by a user m in a groupcast relationship with the first user, Pt_*group*1(m) represents a transmit power of the first user, and *PL_SL_group*1(m) represents a path loss between the first user and the user m.

Method 2 (applicable to both the foregoing mechanism 1 and mechanism 2): The first user performs RSRP measurement to obtain RSRP of transmission information of at least part of users in a groupcast transmission relationship with the first user, and separately calculates a path loss corresponding to each transmission based on transmit powers of at least part of users communicating with the first user:

$$PL\_SL\_group2(m) = Pt\_group2(m) - RSRP\_group2(m);$$

where
RSRP_group2(m) represents an RSRP value measured by a user m in a groupcast relationship with the first user, Pt_*group*2(m) represents a transmit power of the user m, and *PL_SL_group*2(m) represents a path loss between the first user and the user m.

Unicast and groupcast scenario:

Method 1 (applicable to the foregoing mechanism 2): At least part of users in a unicast transmission relationship with the first user and at least part of users in a groupcast transmission relationship with the first user transmit RSRP values measured by these users to the first user, and the first user separately calculates a path loss corresponding to each transmission:

$$PL\_SL\_uni1(p) = Pt\_uni1(p) - RSRP\_uni1(p);$$

$$PL\_SL\_group1(q) = Pt\_group1(q) - RSRP\_group1(q);$$

where
RSRP_*uni*1(p) represents an RSRP value measured by a user p in a unicast relationship with the first user, RSRP_*group*1(q) represents an RSRP value measured by a user q in a groupcast relationship with the first user, *PL_SL_uni*1(p) represents a path loss between the first user and the user p, *PL_S_group*1(q) represents a path loss between the first user and the user q, Pt_*uni*1(p) represents a transmit power of the first user with respect to the user p, and Pt_*group*1(q) represents a transmit power of the first user with respect to the user q.

Method 2 (applicable to both the foregoing mechanism 1 and mechanism 2): The first user performs RSRP measurement to obtain RSRP of transmission information of at least part of users in a unicast transmission relationship with the first user and at least part of users in a groupcast transmission relationship with the first user, and separately calculates a path loss corresponding to each transmission based on transmit powers of at least part of users communicating with the first user:

$$PL\_SL\_uni2(p) = Pt\_uni2(p) - RSRP\_uni2(p);$$

$$PL\_SL\_group2(q) = Pt\_group2(q) - RSRP\_group2(q);$$

where
RSRP_*uni*2(p) represents an RSRP value measured by a user p in a unicast relationship with the first user, RSRP_*group*2(q) represents an RSRP value measured by a user q in a groupcast relationship with the first user, *PL_SL_uni*2(p) represents a path loss between the first user and the user p, *PL_SL_group*2(q) represents a path loss between the first user and the user q, Pt_*uni*2(p) represents a transmit power of the first user with respect to the user p, and Pt_*group*2(q) represents a transmit power of the first user with respect to the user q.

It should be noted that the transmit power may be a transmit power of a data channel, a control channel, a feedback channel, or a synchronization channel; or the transmit power may be a transmit power of a data signal, a control signal, a feedback signal, or a synchronization signal; or the transmit power is a transmit power of data signaling, control signaling, feedback signaling, or synchronization signaling; or the transmit power is a transmit power of a reference signal RS related to a data channel, a control channel, a feedback channel, or a synchronization channel; or the transmit power is a transmit power of a reference signal RS related to a data signal, a control signal, a feedback signal, or a synchronization signal; or the transmit power is a transmit power of a reference signal RS related to data signaling, control signaling, feedback signaling, or synchronization signaling, for example, a transmit power of a PSSCH DMRS, a transmit power of a periodic or aperiodic RS, or a transmit power of a requested RS. The RS mentioned in this application may be at least one of a demodulation reference signal, a positioning reference signal, a phase tracking reference signal, a sounding reference signal, a channel state information reference signal, a sidelink secondary synchronization signal (S-SSS), a sidelink primary synchronization signal (S-PSS), and a discovery reference signal.

Interpretation of the foregoing transmission relationship:

(1) The users in the unicast transmission relationship with the first user may be at least one of the following:

users in a unicast transmission relationship with the first user; and
users in PC5 RRC connection with the first user.

(2) The users in the groupcast transmission relationship with the first user may be at least one of the following:

users in a groupcast transmission relationship with the first user;
users in groupcast transmission with the first user;
users corresponding to preset group IDs;
users corresponding to preset member IDs; and
users corresponding to preset destination IDs.

Optionally, the determining the first path loss based on at least one of the SL path loss and a downlink DL path loss includes at least one of the following:

randomly selecting N1 path losses from a first path loss set as the first path losses;
selecting the greatest N2 path losses from the first path loss set as the first path losses;
selecting the smallest N3 path losses from the first path loss set as the first path losses;
selecting an average value of at least two of the SL path losses as the first path loss;

selecting an average value of at least two of the DL path losses as the first path loss;
selecting an average value of the SL path loss and the DL path loss as the first path loss;
selecting, from the first path loss set, path losses corresponding to N4 transmissions having the longest or shortest remaining packet delay budgets PDBs as the first path losses;
selecting, from the first path loss set, path losses corresponding to N5 transmissions that satisfy a preset distance requirement or are in preset geographical locations as the first path losses, for example, selecting path losses corresponding to N5 transmissions having the shortest or longest communication distances;
selecting, from the first path loss set, a path loss corresponding to a transmission having a transmission priority lower than or equal to a first threshold as the first path loss;
selecting, from the first path loss set, a path loss corresponding to a transmission having a transmission priority higher than or equal to a second threshold as the first path loss;
selecting the SL path loss as the first path loss; and
selecting the DL path loss as the first path loss; where
the first path loss set includes at least one SL path loss and/or at least one DL path loss.

Further optionally, the selecting the SL path loss as the first path loss includes at least one of the following:

in a case that the number of resources included in a physical sidelink feedback channel PSFCH resource set is greater than a third threshold, selecting the SL path loss as the first path loss, where the resource set includes time-frequency domain resources corresponding to a preset slot and a preset sub-channel;
in a case that a resource interval for PSFCH transmission is greater than a fourth threshold, selecting the SL path loss as the first path loss, where the resource interval for PSFCH transmission may be an actual resource interval for PSFCH transmission;
selecting at least one SL path loss from an SL path loss set as the first path loss, where the SL path loss set includes at least two SL path losses, and a difference between any two SL path losses of the SL path loss set is less than a fifth threshold; herein, after the SL path losses are obtained, SL path losses with a path loss difference less than the fifth threshold are selected from the obtained SL path losses to obtain the SL path loss set; selecting an SL path loss corresponding to at least one transmit power of a first transmit power set as the first path loss, where the first transmit power set includes at least two transmit powers, a difference between any two transmit powers of the first transmit power set is less than a sixth threshold, and each transmit power corresponds to one SL path loss; herein, after the SL path losses are obtained, one transmit power is calculated based on each SL path loss, and transmit powers with a difference between transmit powers of less than the sixth threshold are selected from the transmit powers calculated to obtain the first transmit power set;
selecting an SL path loss corresponding to at least one PSD of a first power spectral density PSD set as the first path loss, where the first PSD set includes at least two PSDs, a difference between any two PSDs of the first PSD set is less than a seventh threshold, and each PSD corresponds to one SL path loss; herein, one PSD is obtained based on each SL path loss, and then PSDs with a difference between the PSDs of less than the seventh threshold are selected from the obtained PSDs to obtain the first PSD set; and
in a case that there is no resource configuration for PSFCH code division multiplexing CDM or no resource configuration for specific CDM, selecting the SL path loss as the first path loss.

Optionally, N1, N2, N3, N4, or N5 is equal to 1.
That is, path losses used for calculating a transmit power of each PSFCH are the same.
Optionally, N1, N2, N3, N4, or N5 is greater than 1 (path losses used for calculating a transmit power of each PSFCH are different) in a case that at least one of the following is satisfied:

the number of resources included in a PSFCH resource set is greater than an eighth threshold, where the resource set includes time-frequency domain resources corresponding to a preset slot and a preset sub-channel;
a resource interval for PSFCH transmission is greater than a ninth threshold, where the resource interval is counted based on the number of the resources; herein, the resource interval for PSFCH transmission may be an actual resource interval for PSFCH transmission;
a difference between any two path losses of a second path loss set is less than a tenth threshold, where the path loss set includes at least two path losses, and the at least two path losses are SL path losses and/or DL path losses; herein, path losses with a difference between two path losses of less than the tenth threshold may be selected from the obtained SL path losses and/or DL path losses to obtain the second path loss set;
a difference between any two transmit powers of a second transmit power set is less than an eleventh threshold, where the second transmit power set includes at least two transmit powers, and each transmit power corresponds to one path loss; herein, after the SL path losses and the DL path losses are obtained, one transmit power is calculated based on each of the obtained path losses, and transmit powers with a difference between transmit powers of less than the eleventh threshold are selected from the obtained transmit powers to obtain the second transmit power set; and

a difference between any two PSDs of a second PSD set is less than a twelfth threshold, where the first PSD set includes at least two PSDs, and each PSD corresponds to one path loss; after the SL path losses and the DL path losses are obtained, one PSD is obtained based on each of the obtained path losses, and then PSDs with a difference between PSDs of less than the twelfth threshold are selected from the obtained PSDs to obtain the second PSD set.

Optionally, in a case that the first path loss is the SL path loss, the controlling a transmit power of a target transmission on a sidelink based on the first path loss includes:

obtaining a first parameter based on the first path loss;
obtaining a target parameter based on at least one of the first parameter and a second parameter; and
controlling the transmit power of the target transmission on the sidelink based on the target parameter; where
the first parameter is calculated based on the SL path loss and a first SL power parameter value; and
the second parameter is calculated based on a first DL power parameter value in a case that the first DL power parameter value is provided.

In this embodiment of this application, the first parameter is specifically calculated based on the SL path loss, the first SL power parameter value, a sidelink subcarrier spacing, and a third parameter ($\alpha_{SL,PSFCH}$).
The second parameter is specifically calculated based on the first DL power parameter, the DL path loss, the sidelink subcarrier spacing, and a fourth parameter ($\alpha_{DL,PSFCH}$).
Optionally, the obtaining a target parameter based on at least one of the first parameter and a second parameter includes:

in a case that both the first parameter and the second parameter are present, obtaining the target parameter by at least one of the following:

using the first parameter as the target parameter;
using the second parameter as the target parameter;
selecting a smaller one of the first parameter and the second parameter as the target parameter;
selecting a greater one of the first parameter and the second parameter as the target parameter;
using a sum of a first value and a second value as the target parameter, where the first value is a product of the first parameter and a first weight value, and the second value is a product of the second parameter and a second weight value; and
using an average value of the first parameter and the second parameter as the target parameter.

Optionally, in a case that only the first parameter is present, the first parameter is used as the target parameter.
Optionally, in a case that only the second parameter is present, the second parameter is used as the target parameter.
Optionally, the obtaining a target parameter based on at least one of the first parameter and a second parameter includes:

in a case that the first SL power parameter value is provided, determining the first parameter as the target parameter; and/or
in a case that the first SL power parameter value is not provided and that the first DL power parameter value is provided, determining the second parameter as the target parameter.

Optionally, the obtaining a target parameter based on at least one of the first parameter and a second parameter includes: in a case that the first DL power parameter value is provided, determining the second parameter as the target parameter; and/or
in a case that the first DL power parameter value is not provided and that the first SL power parameter value is provided, determining the first parameter as the target parameter.
For example, if a first SL power parameter value is provided for a user, the first parameter $P_{PSFCH,SL,one}$ is calculated according to the following formula:

$$P_{PSFCH,SL,one} = P_{O,SL,PSFCH} + 10\log_{10}(2^{\mu}) + \alpha_{SL,PSFCH} \bullet PL_{SL};$$

where

$P_{O,SL,PSFCH}$ is the first SL power parameter value, $\mu$= 0/1/2/3 corresponds to sidelink subcarrier spacing 15/30/60/120 kHz, $\alpha_{SL,PSFCH}$ is a value of a third parameter, and $PL_{SL}$ is a path loss that is selected by the user from SL path losses and used for power control;

For another example, if a first DL power parameter value is provided for a user, a second parameter $P_{PSFCH,DL,\text{one}}$ is calculated according to the following formula, and power control is performed based on the second parameter:

$$P_{PSFCH,DL,\text{one}} = P_{O,DL,PSFCH} + 10\log_{10}(2^{\mu}) + \alpha_{DL,PSFCH} \bullet PL_{DL};$$

where

$P_{O,DL,PSFCH}$ is the first DL power parameter value, $\mu$ = 0/1/2/3 corresponds to sidelink subcarrier spacing 15/30/60/120 kHz, $\alpha_{DL,PSFCH}$ is a value of a fourth parameter, and $PL_{DL}$ is a path loss between a base station and the user.

If the first DL power parameter value is not provided for a user, and the first SL power parameter value is provided for the user, the first parameter is calculated based on the first SL power parameter value, and power control is performed based on the first parameter.

In this embodiment of this application, the first SL power parameter value may be an SL initial power, an SL default power, an SL initial transmit power, or a desired receive power.

The first DL power parameter value may be a DL initial power, a DL default power, a DL initial transmit power, or a desired receive power.

Optionally, the controlling a transmit power of a target transmission on a sidelink based on the first path loss includes:

controlling, based on the first path loss, a transmit power of a sidelink synchronization signal block S-SSB/physical sidelink broadcast channel PSBCH transmission.

Specifically, the transmit power of the S-SSB/PSBCH transmission is controlled according to the following formula:

$$P_{\text{S-SSB}}(i) = \min(P_{\text{CMAX}}, P_{O,\text{S-SSB}} + 10\log_{10}(2^{\mu} \bullet M_{\text{RB}}^{\text{S-SSB}}) + \alpha_{\text{S-SSB}} \bullet PL);$$

where

$P_{\text{CMAX}}$ is a first power, $P_{O,\text{S-SSB}}$ is a value of a fifth parameter, u = 0/1/2/3 corresponds to sidelink subcarrier spacing 15/30/60/120 kHz, $M_{\text{RB}}^{\text{S-SSB}}$ is the number of RBs occupied by one S-SSB, $\alpha_{\text{S-SSB}}$ is a value of a sixth parameter, and PL is a first path loss. Optionally, the first path loss is a DL path loss or an SL path loss.

Optionally, the target transmission includes at least one transmission.

The controlling a transmit power of a target transmission on a sidelink based on the first path loss includes:

in a case that a total power of the target transmission determined based on the first path loss is greater than a first power of the first terminal device, discarding transmissions according to at least one of the following until the total power of the target transmission is less than or equal to the first power;

in a case that only a unicast or groupcast communication manner is present, randomly discarding M1 transmissions;

in a case that only a unicast or groupcast communication manner is present, discarding M2 transmissions having the highest or lowest priorities;

in a case that only a unicast or groupcast communication manner is present, discarding M3 transmissions having the greatest or smallest path losses;

in a case that only a unicast or groupcast communication manner is present, discarding M4 transmissions that satisfy a preset distance requirement or are in preset geographical locations, for example, in a case that only a unicast or groupcast communication manner is present, discarding M4 transmissions having the longest or shortest transmission distances;

in a case that only a unicast or groupcast communication manner is present, discarding M5 transmissions having the longest or shortest remaining PDBs;

in a case that only a unicast or groupcast communication manner is present, discarding a transmission having a transmission priority higher than a thirteenth threshold;

in a case that only a unicast or groupcast communication manner is present, discarding a transmission having a transmission priority lower than a fourteenth threshold;

in a case that both a unicast communication manner and a groupcast communication manner are present, selecting from unicast transmissions a transmission that needs to be discarded;

in a case that both a unicast communication manner and a groupcast communication manner are present, selecting from groupcast transmissions a transmission that needs to be discarded; and

in a case that both a unicast communication manner and a groupcast communication manner are present, selecting from all transmissions a transmission that needs to be discarded.

Further optionally, the selecting a transmission that needs to be discarded includes at least one of the following:

randomly discarding W1 transmissions;

discarding W2 transmissions having the highest or lowest priorities;

discarding W3 transmissions having the greatest or smallest path losses;

discarding W4 transmissions that satisfy a preset distance requirement or are in preset geographical locations, for example, discarding W4 transmissions having the longest or shortest transmission distances;

discarding W5 transmissions having the longest or shortest remaining PDBs;

discarding a transmission having a transmission priority higher than a fifteenth threshold; and

discarding a transmission having a transmission priority lower than a sixteenth threshold.

It should be noted that the first power may be a maximum output power limited by capability of UE; or the first power is determined based on capability of a user; or the first power is a transmission power or a maximum transmission power that is configured, pre-configured, or indicated by another UE; or the first power is a power for sidelink transmission limit.

The following describes the power control method of this application with reference to specific embodiments.

Embodiment 1:

A UE having $N_{sch,Tx,PSFCH}$ scheduled PSFCH transmissions and capable of transmitting up to $N_{max,PSFCH}$ PSFCHs determines the number $N_{Tx,PSFCH}$ of PSFCHs concurrently transmitted on one resource pool at a PSFCH transmission occasion i and power $P_{PSFCH,k}(i)$ of PSFCH transmission k ($1 \leq K \leq N_{Tx,PSFCH}$) according to the following manner:

if p0-DL-PSFCH is provided,

$$P_{PSFCH,DL,\text{one}} = P_{O,DL,PSFCH} + 10\log_{10}(2^{\mu}) + \alpha_{DL,PSFCH} \bullet PL_{DL};$$

where

$P_{O,DL,PSFCH}$ is a value of p0-DL-PSFCH; $\alpha_{DL,PSFCH}$ is a value of alpha-DL-PSFCH (if alpha-DL-PSFCH is provided), otherwise, $\alpha_{DL,PSFCH} = 1$; and

$PL_{DL}$ is a path loss value corresponding to a transmission. An implementation is as follows:

$PL_{DL} = PL_{b,f,c}(q_d)$ that is, $PL_{DL}$ is a downlink path loss calculated by UE by using a reference signal with an index of $q_d$ for an activated downlink bandwidth part of a carrier f of a serving cell c, measured in dB.

Further, the reference signal may be as follows:

1. In a case that UE is configured to monitor a PDCCH to detect for a DCI format 0_0, DCI format 0_1, DCI format 0_2, DCI format 3_0, or DCI format 3_1, the UE is configured to determine an RS resource corresponding to a PUSCH transmission power scheduled by the DCI format 0_0, DCI format 0_1, DCI format 0_2, DCI format 3_0, or DCI format 3_1; and/or

2. In a case that UE is not configured to monitor a PDCCH to detect for a DCI format 0_0, DCI format 0_1, DCI format 0_2, DCI format 3_0, or DCI format 3_1, the UE is configured to obtain an RS resource corresponding to an SS/PBCH block of an MIB.

If p0-SL-PSFCH is provided,

$$P_{PSFCH,SL,\text{one}} = P_{O,SL,PSFCH} + 10\log_{10}(2^{\mu}) + \alpha_{SL,PSFCH} \bullet PL_{SL};$$

where

$P_{O,SL,PSFCH}$ is a value of p0-SL-PSFCH; $\alpha_{SL,PSFCH}$ is a value of alpha-SL-PSFCH (if alpha-SL-PSFCH is provided), otherwise, $\alpha_{SL,PSFCH}$ =1; and

$$PL_{SL} = \text{seventh parameter} - \text{eighth parameter},$$

where

the seventh parameter is referenceSignalPower, and the eighth parameter is higher layer filtered RSRP.

The referenceSignalPower is a PSSCH transmit power per RE of each antenna port of UE obtained through high layer filtering across PSSCH transmissions by using filter configuration provided by filterCoefficient-SL; and higher layer filtered RSRP is obtained from PSSCH DM-RS by using configuration of a filter provided by filterCoefficient-SL and is reported to the UE by a UE that receives PSCCH-PSSCH transmissions.

If neither p0-DL-PSFCH nor p0-SL-PSFCH is provided,

$$P_{PSFCH,k}(i) = P_{CMAX} - 10\log_{10}(N_{Tx,PSFCH});$$

where

UE autonomously determines, according to rules for simultaneous transmission or reception of PSFCHs, $N_{Tx,PSFCH}$ PSFCH transmissions that are in ascending order of priorities, so as to make $N_{TX,PSFCH} \geq 1$, and determines a maximum transmit power $P_{CMAX}$ supported by a user for $N_{Tx,PSFCH}$ PSFCH transmissions;

otherwise, if both p0-DL-PSFCH and p0-SL-PSFCH are provided,

$$P_{PSFCH,one} = \min(P_{O,DL,PSFCH}, P_{O,SL,PSFCH});$$

otherwise, if p0-DL-PSFCH is provided, $P_{PSFCH,one} = P_{O,DL,PSFCH}$ ;

otherwise, $P_{PSFCH,one} = P_{O,SL,PSFCH}$.

If $N_{sch,Tx,PSFCH} \leq N_{max,PSFCH}$ ;

if $P_{PSFCH,one} + 10\log_{10}(N_{sch,Tx,PSFCH}) \leq P_{CMAX}$, where $P_{CMAX}$ is the maximum transmit power supported by the user for $N_{sch,Tx,PSFCH}$ PSFCH transmissions;

$N_{Tx,PSFCH} = N_{sch,Tx,PSFCH}$, and $P_{PSFCH,k}(i) = P_{PSFCH,one}$ ;

otherwise, the UE autonomously determines, according to rules for simultaneous transmission/reception of PSFCHs, $N_{Tx,PSFCH}$ PSFCH transmissions that are in ascending order of priorities, so as to make

$$N_{Tx,PSFCH} \geq \max(1, \sum_{i=1}^{K} M_i)$$, where $M_i$ is the number of PSFCHs having a transmission priority of i, and K is defined as a maximum value that satisfies $P_{PSFCH,one} + 10\log_{10}(\max(1, \sum_{i=1}^{K} M_i)) \leq P_{CMAX}$ , where $P_{CMAX}$

is the maximum transmit power supported by the user and is used for transmission of all PSFCHs having transmission priorities of 1, 2, ..., K (if any).

Otherwise, K = 0; and

$$P_{PSFCH,k}(i) = \min(P_{CMAX} - 10\log_{10}(N_{Tx,PSFCH}), P_{PSFCH,one});$$

where

$P_{CMAX}$ is the maximum transmit power supported by the user and is used for transmission of $N_{Tx,PSFCH}$ PSFCHs;

otherwise, the UE autonomously determines, according to rules for simultaneous transmission/reception of PSFCHs, $N_{max,PSFCH}$ PSFCH transmissions that are in ascending order of priorities;

if $P_{PSFCH,one} + 10\log_{10}(N_{max,PSFCH}) \leq P_{CMAX}$, where $P_{CMAX}$ is the maximum transmit power supported by the user and is used for transmission of $N_{max,PSFCH}$ PSFCHs, $N_{Tx,PSFCH} = N_{sch,Tx,PSFCH}$ and $P_{PSFCH,k}(i) = P_{PSFCH,one}$ ;

otherwise,

the UE autonomously determines, according to rules for simultaneous transmission/reception of PSFCHs, $N_{Tx,PSFCH}$ PSFCH transmissions that are in ascending order of priorities, so as to make $N_{Tx, PSFCH} \geq \max(1, \sum_{i=1}^{K} M_i)$ ,

where $M_i$ is the number of PSFCHs having a transmission priority of i, and K is defined as a maximum value that satisfies $P_{PSFCH, one} + 10\log_{10}( \max(1, \sum_{i=1}^{K} M_i)) \leq P_{CMAX}$ , where $P_{CMAX}$ is the maximum transmit power supported by the user and is used for transmission of all PSFCHs having transmission priorities of 1, 2, ..., K (if any).

Otherwise, K = 0, and

$$P_{PSFCH,k}(i) = \min (P_{CMAX} - 10\log_{10}(N_{Tx, PSFCH}), P_{PSFCH, one}),$$

where
$P_{CMAX}$ is the maximum transmit power supported by the user and is used for transmission of $N_{Tx,PSFCH}$ PSFCHs.

Embodiment 2:

A UE having $N_{sch,Tx,PSFCH}$ scheduled PSFCH transmissions and capable of transmitting $N_{max,PSFCH}$ PSFCHs at most determines the number $N_{Tx,PSFCH}$ of PSFCHs concurrently transmitted on one resource pool at a PSFCH transmission occasion i and power $P_{PSFCH,k}(i)$ of PSFCH transmission k ($1 \leq K \leq N_{Tx,PSFCH}$) according to the following manner:
if p0-DL-PSFCH is provided,

$$P_{PSFCH,DL,one} = P_{O,DL,PSFCH} + 10\log_{10}(2^{\mu}) + \alpha_{DL,PSFCH} \bullet PL_{DL};$$

where

$P_{O,DL,PSFCH}$ is a value of p0-DL-PSFCH; $\alpha_{DL,PSFCH}$ is a value of alpha-DL-PSFCH (if alpha-DL-PSFCH is provided), otherwise, $\alpha_{DL,PSFCH}$ =1; and
$PL_{DL} = PL_{b,f,c}(q_d)$, that is, $PL_{DL}$ is a downlink path loss calculated by UE by using a reference signal with an index of $q_d$ for an activated downlink bandwidth part of a carrier f of a serving cell c, measured in dB.

Further, the reference signal may be as follows:

1. In a case that UE is configured to monitor a PDCCH to detect for a DCI format 0_0, DCI format 0_1, DCI format 0_2, DCI format 3_0, or DCI format 3_1, the UE is configured to determine an RS resource corresponding to a PUSCH transmission power scheduled by the DCI format 0_0, DCI format 0_1, DCI format 0_2, DCI format 3_0, or DCI format 3_1; and/or
2. In a case that UE is not configured to monitor a PDCCH to detect for a DCI format 0_0, DCI format 0_1, DCI format 0_2, DCI format 3_0, or DCI format 3_1, the UE is configured to obtain an RS resource corresponding to an SS/PBCH block of an MIB.

If $N_{sch,Tx,PSFCH} \leq N_{max,PSFCH}$,

if $P_{PSFCH, one} + 10\log_{10}(NN_{sch,Tx,PSFCH}) \leq P_{CMAX}$, where $P_{CMAX}$ is the maximum transmit power supported by the user for $N_{sch,Tx,PSFCH}$ PSFCH transmissions, $N_{Tx,PSFCH} = N_{sch,Tx,PSFCH}$, and $P_{PSFCH,K}(i) = P_{PSFCH,one}$;
otherwise, the UE autonomously determines, according to rules for simultaneous transmission/reception of PSFCHs, $N_{Tx,PSFCH}$ PSFCH transmissions that are in ascending order of priorities, so as to make $N_{Tx, PSFCH} \geq \max(1, \sum_{i=1}^{K} M_i)$ , where $M_i$ is the number of PSFCHs having a transmission priority of i, and K is defined as a maximum value that satisfies $P_{PSFCH, one} + 10\log_{10}( \max(1, \sum_{i=1}^{K} M_i)) \leq P_{CMAX}$ , where $P_{CMAX}$ is the maximum transmit power supported by the user and is used for transmission of all PSFCHs having transmission priorities of 1, 2, ..., K (if any).

Otherwise, K = 0, and

$$P_{PSFCH,k}(i) = \min (P_{CMAX} - 10\log_{10}(N_{Tx, PSFCH}), P_{PSFCH, one}),$$

where

$P_{CMAX}$ is the maximum transmit power supported by the user and is used for transmission of $N_{Tx,PSFCH}$ PSFCHs; otherwise, the UE autonomously determines, according to rules for simultaneous transmission/reception of PSFCHs, $N_{max,PSFCH}$ PSFCH transmissions that are in an ascending order of priorities;
if $P_{PSFCH, one} + 10\log_{10} (N_{max,PSFCH}) \leq P_{CMAX}$, where $P_{CMAX}$ is the maximum transmit power supported by the user and is used for transmission of $N_{max,PSFCH}$ PSFCHs, $N_{Tx,PSFCE} = N_{max,PSFCH}$ and $P_{PSFCH,(i)} = P_{SFCH,one}$;
otherwise, the UE autonomously determines, according to rules for simultaneous transmission/reception of PSFCHs, $N_{Tx,PSFCH}$ PSFCH transmissions that are in ascending order of priorities, so as to make

$N_{Tx, PSFCH} \geq \max(1, \sum_{i=1}^{K} M_i)$ , where $M_i$ is the number of PSFCHs having a transmission priority of i, and K is defined as a maximum value that satisfies $P_{PSFCH, one} + 10\log_{10}(\max(1, \sum_{i=1}^{K} M_i)) \leq P_{CMAX}$ , where $P_{CMAX}$
is the maximum transmit power supported by the user and is used for transmission of all PSFCHs having transmission priorities of 1, 2, ..., K (if any).

Otherwise, K = 0, and

$$P_{PSFCH,k}(i) = \min (P_{CMAX} - 10\log_{10}(N_{Tx, PSFCH}), P_{PSFCH, one}),$$

where

$P_{CMAX}$ is the maximum transmit power supported by the user and is used for transmission of $N_{Tx,PSFCH}$ PSFCHs; otherwise, if p0-SL-PSFCH is provided,

$$P_{PSFCH,SL,one} = P_{O,SL,PSFCH} + 10\log_{10}(2^{\mu}) + \alpha_{SL,PSFCH} \bullet PL_{SL},$$

where
$P_{O,SL,PSFCH}$ is a value of p0-SL-PSFCH; $\alpha_{SL,PSFCH}$ is a value of alpha-SL-PSFCH (if alpha-SL-PSFCH is provided), otherwise, $\alpha_{SL,PSFCH} = 1$; and

$$PL_{SL} = \text{seventh parameter} - \text{eighth parameter},$$

where
the seventh parameter is referenceSignalPower, and the eighth parameter is higher layer filtered RSRP.

The referenceSignalPower is a PSSCH transmit power per RE for each antenna port of UE obtained through high layer filtering across PSSCH transmissions by using filter configuration provided by filterCoefficient-SL; and higher layer filtered RSRP is obtained from PSSCH DM-RS by using configuration of a filter provided by filterCoefficient-SL and is reported to the UE by a UE that receives PSCCH-PSSCH transmissions.

If $N_{sch,Tx,PSFCH} \leq N_{max,PSFCH}$,

if $P_{PSFCH, one} + 10\log_{10} (N_{sch,Tx,PSFCH}) \leq P_{CMAX}$, where $P_{CMAX}$ is the maximum transmit power supported by the user for $N_{sch,Tx,PSFCH}$ PSFCH transmissions;

$$N_{Tx,PSFCH} = N_{max,PSFCH}, \text{ and } P_{PSFCH,k}(i) = P_{PSFCH,one}$$

otherwise, the UE autonomously determines, according to rules for simultaneous transmission/reception of PSFCHs, $N_{Tx,PSFCH}$ PSFCH transmissions that are in an ascending order of priorities, so as to make

$$N_{Tx,PSFCH} \geq max(1, \sum_{i=1}^{K} M_i)$$ , where $M_i$ is the number of PSFCHs having a transmission priority of i, and K is defined as

a maximum value that satisfies $$P_{PSFCH, one} + 10\log_{10}(max(1, \sum_{i=1}^{K} M_i)) \leq P_{CMAX}$$ , where $P_{CMAX}$ is the maximum transmit power supported by the user and is used for transmission of all PSFCHs having transmission priorities of 1, 2, ..., K (if any).

Otherwise, K = 0, and

$$P_{PSFCH,k}(i) = min(P_{CMAX} - 10\log_{10}(N_{Tx, PSFCH}), P_{PSFCH, one}),$$

where

$P_{CMAX}$ is the maximum transmit power supported by the user and is used for transmission of $N_{Tx,PSFCH}$ PSFCHs; otherwise, the UE autonomously determines, according to rules for simultaneous transmission/reception of PSFCHs, $N_{max,PSFCH}$ PSFCH transmissions that are in an ascending order of priorities; if $P_{PSFCH, one} + 10\log_{10}(N_{max,PSFCH}) \leq P_{CMAX}$, where $P_{CMAX}$ is the maximum transmit power supported by the user and is used for transmission of $N_{max,PSFCH}$ PSFCHs,

$$N_{Tx,PSFCH} = N_{max,PSFCH}, \text{ and } P_{PSFCH,k}(i) = P_{PSFCH,one};$$

otherwise, the UE autonomously determines, according to rules for simultaneous transmission/reception of PSFCHs, $N_{Tx,PSFCH}$ PSFCH transmissions that are in ascending order of priorities, so as to make

$$N_{Tx,PSFCH} \geq max(1, \sum_{i=1}^{K} M_i)$$ , where A4 is the number of PSFCHs having a transmission priority of i, and K is defined as a maximum value that satisfies $$P_{PSFCH, one} + 10\log_{10}(max(1, \sum_{i=1}^{K} M_i)) \leq P_{CMAX}$$ , where $P_{CMAX}$ is the maximum transmit power supported by the user and is used for transmission of all PSFCHs having transmission priorities of 1, 2, ..., K (if any).

Otherwise, K = 0, and

$$P_{PSFCH,k}(i) = min(P_{CMAX} - 10\log_{10}(N_{Tx, PSFCH}), P_{PSFCH, one}),$$

where
$P_{CMAX}$ is the maximum transmit power supported by the user and is used for transmission of $N_{Tx,PSFCH}$ PSFCHs.
Otherwise, $P_{PSFCH,k}$(i) = $P_{CMAX}$-10log$_{10}$($N_{Tx,PSFCH}$), where
the UE autonomously determines, according to rules for simultaneous transmission/reception of PSFCHs, $N_{Tx,PSFCH}$ PSFCH transmissions that are in ascending order of priorities, so as to make $N_{Tx,PSFCH} \geq 1$, and determines a maximum transmit power $P_{CMAX}$ supported by the user for $N_{Tx,PSFCH}$ PSFCH transmissions.

Embodiment 3:

UE determines a power $P_{S-SSB}$(i) at an S-SSB transmission occasion in a slot i according to the following manner:

$$P_{S-SSB}(i) = min(P_{CMAX}, P_{0, S-SSB} + 10\log_{10}(2^{\mu} \bullet M_{RB}^{S-SSB}) + \alpha_{S-SSB} \bullet PL),$$

where

$P_{CMAX}$ is a maximum transmit power supported by a user;
$P_{0,S-SSB}$ is a value of p0-DL-S-SSB (if provided), otherwise, $P_{S-SSB}(i)=P_{CMAX}$;
$\alpha_{S-SSB}$ is a value of alpha-DL-S-SSB (if provided), otherwise, $\alpha_{S-SSB=1}$; and
PL is a path loss value corresponding to a transmission. An implementation is as follows:
$PL=PL_{b,f,c}(q_d)$, that is, *PL* is a downlink path loss calculated by UE by using a reference signal with an index of $q_d$ for an activated downlink bandwidth part of a carrier f of a serving cell c, measured in dB.

Further, the reference signal may be as follows:

1. In a case that UE is configured to monitor a PDCCH to detect for a DCI format 0_0, the UE is configured to determine an RS resource corresponding to a PUSCH transmission power scheduled by the DCI format 0_0; and/or
2. In a case that UE is not configured to monitor a PDCCH to detect for a DCI format 0_0, the UE is configured to obtain an RS resource corresponding to an SS/PBCH block of an MIB; $M_{RB}^{S-SSB}=11$ is the number of RBs of one S-SSB/PSBCH transmission under SCS configuration u.

It should be noted that, in this embodiment of this application, rules for simultaneous transmission or reception of PSFCHs are as follows:

If UE is to transmit $N_{sch,Tx,PSPCH} \leq N_{max,PSFCH}$ PSFCHs and receives $N_{sch,Rx,PSFCH}$ PSFCHs, and transmission of $N_{sch,Tx,PSFCH}$ PSFCHs may overlap with reception of $N_{sch,Rx,PSFCH}$ PSFCHs in terms of time, the UE transmits or receives only one group of PSFCHs corresponding to the smallest priority field values, where the smallest priority field values are respectively determined by a first set of SCI formats 1-A associated with $N_{sch,Tx,PSFCH}$ PSFCHs and a second set of SCI formats 1-A associated with $N_{sch,Rx,PSFCH}$ PSFCHs.

If UE is to transmit $N_{sch,Tx,PSFCH}$ PSFCHs at one PSFCH transmission occasion, the UE transmits $N_{Tx,PSFCH}$ PSFCHs corresponding to the smallest $N_{TxPSFCH}$ priority field values indicated by all SCI formats 1-A associated with the PSFCH transmission occasion.

In this embodiment of this application, the first path loss is obtained, where the first path loss is determined based on the sidelink SL path loss, or the first path loss is determined based on the SL path loss and the downlink DL path loss; and the transmit power of the target transmission on the sidelink is controlled based on the first path loss. In this embodiment of this application, the transmit power of the target transmission on the sidelink can be controlled based on the SL path loss, for example, in the case of unicast, a power is calculated based on an SL path loss between users, so that a power control manner matches a current communication scenario. This can improve accuracy of power control in an SL transmission scenario and avoid additional transmit power overheads, thereby saving energy.

It should be noted that the power control method provided in this embodiment of this application may be performed by a power control apparatus or a control module for performing the power control method in the power control apparatus. This embodiment of this application describes the power control apparatus provided in the embodiment of this application by using an example in which the power control apparatus performs the power control method.

As shown in FIG. 3, an embodiment of this application further provides a power control apparatus 300, applied to a first terminal device and including:

a first obtaining module 301, configured to obtain a first path loss, where the first path loss is determined based on a sidelink SL path loss, or the first path loss is determined based on the SL path loss and a downlink DL path loss; and
a control module 302, configured to control a transmit power of a target transmission on a sidelink based on the first path loss.

The apparatus provided in this embodiment of this application further includes: a second obtaining module, where the second obtaining module is configured to perform at least one of the following:

calculating the SL path loss based on a reference signal received power RSRP;
determining the SL path loss based on at least part of path losses transmitted by a second terminal device, where the second terminal device is a terminal device that communicates with the first terminal device;
determining the SL path loss based on a path loss notified of by a third terminal device, where the third terminal device is a scheduling terminal or a header user;
obtaining the SL path loss based on protocol specifications;

determining the SL path loss based on a path loss configured for a base station; and
determining the SL path loss based on a pre-configured path loss.

In the apparatus provided in this embodiment of this application, the first obtaining module is configured to: calculate the SL path loss based on at least part of RSRPs transmitted by the second terminal device; or calculate the SL path loss based on an RSRP measured by the first terminal device and at least part of transmit powers of the second terminal device.

In the apparatus provided in this embodiment of this application, the transmit power of the second terminal device is pre-configured; or

the transmit power of the second terminal device is transmitted by the second terminal device to the first terminal device; or
the transmit power of the second terminal device is notified by the third terminal device to the first terminal device.

In the apparatus provided in this embodiment of this application, the first obtaining module is configured to perform at least one of the following:

randomly selecting N1 path losses from a first path loss set as the first path losses;
selecting the greatest N2 path losses from the first path loss set as the first path losses;
selecting the smallest N3 path losses from the first path loss set as the first path losses;
selecting an average value of at least two of the SL path losses as the first path loss;
selecting an average value of at least two of the DL path losses as the first path loss;
selecting an average value of the SL path loss and the DL path loss as the first path loss;
selecting, from the first path loss set, path losses corresponding to N4 transmissions having the longest or shortest remaining packet delay budgets PDBs as the first path loss;
selecting, from the first path loss set, path losses corresponding to N5 transmissions having the shortest or longest communication distances as the first path losses;
selecting, from the first path loss set, path losses corresponding to N6 transmissions that satisfy a preset distance requirement or are in preset geographical locations as the first path losses;
selecting, from the first path loss set, a path loss corresponding to a transmission having a transmission priority lower than or equal to a first threshold as the first path loss;
selecting, from the first path loss set, a path loss corresponding to a transmission having a transmission priority higher than or equal to a second threshold as the first path loss;
selecting the SL path loss as the first path loss; and
selecting the DL path loss as the first path loss; where
the first path loss set includes at least one SL path loss and/or at least one DL path loss.

In the apparatus provided in this embodiment of this application, the first obtaining module is configured to perform at least one of the following:

in a case that the number of resources included in a physical sidelink feedback channel PSFCH resource set is greater than a third threshold, selecting the SL path loss as the first path loss;
in a case that a resource interval for PSFCH transmission is greater than a fourth threshold, selecting the SL path loss as the first path loss;
selecting at least one SL path loss from an SL path loss set as the first path loss, where the SL path loss set includes at least two SL path losses, and a difference between any two SL path losses of the SL path loss set is less than a fifth threshold;
selecting an SL path loss corresponding to at least one transmit power of a first transmit power set as the first path loss, where the first transmit power set includes at least two transmit powers, a difference between any two transmit powers of the first transmit power set is less than a sixth threshold, and each transmit power corresponds to one SL path loss;
selecting an SL path loss corresponding to at least one PSD of a first power spectral density PSD set as the first path loss, where the first PSD set includes at least two PSDs, a difference between any two PSDs of the first PSD set is less than a seventh threshold, and each PSD corresponds to one SL path loss; and
in a case that there is no resource configuration for PSFCH code division multiplexing CDM or no resource configuration for specific CDM, selecting the SL path loss as the first path loss.

In the apparatus provided in this embodiment of this application, N1, N2, N3, N4, or N5 is greater than 1 in a case that one of the following is satisfied:

the number of resources included in a PSFCH resource set is greater than an eighth threshold, where the resource set includes time-frequency domain resources corresponding to a preset slot and a preset sub-channel;
a resource interval for PSFCH transmission is greater than a ninth threshold;
a difference between any two path losses of a second path loss set is less than a tenth threshold, where the path loss set includes at least two path losses, and the at least two path losses are SL path losses and/or DL path losses;
a difference between any two transmit powers of a second transmit power set is less than an eleventh threshold, where the second transmit power set includes at least two transmit powers, and each transmit power corresponds to one path loss; and
a difference between any two PSDs of a second PSD set is less than a twelfth threshold, where the first PSD set includes at least two PSDs, and each PSD corresponds to one path loss.

In the apparatus provided in this embodiment of this application, the second obtaining submodule is configured to: in a case that both the first parameter and the second parameter are present, obtain the target parameter by at least one of the following:

using the first parameter as the target parameter;
using the second parameter as the target parameter;
selecting a smaller one of the first parameter and the second parameter as the target parameter;
selecting a greater one of the first parameter and the second parameter as the target parameter;
using a sum of a first value and a second value as the target parameter, where the first value is a product of the first parameter and a first weight value, and the second value is a product of the second parameter and a second weight value; and
using an average value of the first parameter and the second parameter as the target parameter.

In the apparatus provided in this embodiment of this application, in a case that the first path loss is the SL path loss, the control module includes:

a first obtaining submodule, configured to obtain a first parameter based on the first path loss;
a second obtaining submodule, configured to obtain a target parameter based on at least one of the first parameter and a second parameter; and
a control submodule, configured to control a transmit power of a target transmission on a sidelink based on the target parameter; where
the first parameter is calculated based on the SL path loss and a first SL power parameter value; and
the second parameter is calculated based on a first DL power parameter value in a case that the first DL power parameter value is provided.

In the apparatus provided in this embodiment of this application, the second obtaining submodule includes:

a first obtaining unit, configured to: in a case that the first SL power parameter value is provided, determine the first parameter as the target parameter; and/or
in a case that the first SL power parameter value is not provided and that the first DL power parameter value is provided, determine the second parameter as the target parameter.

In the apparatus provided in this embodiment of this application, the second obtaining submodule includes:

a second obtaining unit, configured to: in a case that the first DL power parameter value is provided, determine the second parameter as the target parameter; and/or
in a case that the first DL power parameter value is not provided and that the first SL power parameter value is provided, determine the first parameter as the target parameter.

In the apparatus provided in this embodiment of this application, the control module is configured to control, based on the first path loss, a transmit power of a sidelink synchronization signal block S-SSB/physical sidelink broadcast channel PSBCH transmission.
In the apparatus provided in this embodiment of this application, the target transmission includes at least one transmission; and
the control module is configured to perform at least one of the following:

in a case that a total power of the target transmission determined based on the first path loss is greater than a first power of the first terminal device, discarding transmissions according to at least one of the following until the total power of the target transmission is less than or equal to the first power;
in a case that only a unicast or groupcast communication manner is present, randomly discarding M1 transmissions;
in a case that only a unicast or groupcast communication manner is present, discarding M2 transmissions having the highest or lowest priorities;
in a case that only a unicast or groupcast communication manner is present, discarding M3 transmissions having the greatest or smallest path losses;
in a case that only a unicast or groupcast communication manner is present, discarding M4 transmissions that satisfy a preset distance requirement or are in preset geographical locations;
in a case that only a unicast or groupcast communication manner is present, discarding M5 transmissions having the longest or shortest remaining PDBs;
in a case that only a unicast or groupcast communication manner is present, discarding a transmission having a transmission priority higher than a thirteenth threshold;
in a case that only a unicast or groupcast communication manner is present, discarding a transmission having a transmission priority lower than a fourteenth threshold;
in a case that both a unicast communication manner and a groupcast communication manner are present, selecting from unicast transmissions a transmission that needs to be discarded;
in a case that both a unicast communication manner and a groupcast communication manner are present, selecting from groupcast transmissions a transmission that needs to be discarded; and
in a case that both a unicast communication manner and a groupcast communication manner are present, selecting from all transmissions a transmission that needs to be discarded.

In the apparatus provided in this embodiment of this application, the control module is specifically configured to perform at least one of the following:

randomly discarding W1 transmissions;
discarding W2 transmissions having the highest or lowest priorities;
discarding W3 transmissions having the greatest or smallest path losses;
discarding W4 transmissions that satisfy a preset distance requirement or are in preset geographical locations;
discarding W5 transmissions having the longest or shortest remaining PDBs;
discarding a transmission having a transmission priority higher than a fifteenth threshold; and
discarding a transmission having a transmission priority lower than a sixteenth threshold.

In the apparatus provided in this embodiment of this application, the first path loss is obtained, where the first path loss is determined based on a sidelink SL path loss, or the first path loss is determined based on the SL path loss and the downlink DL path loss; and the transmit power of the target transmission on the sidelink is controlled based on the first path loss. In this embodiment of this application, the transmit power of the target transmission on the sidelink can be controlled based on the SL path loss, for example, in the case of unicast, a power is calculated based on an SL path loss between users, so that a power control manner matches a current communication scenario. This can improve accuracy of power control in an SL transmission scenario and avoid additional transmit power overheads, thereby saving energy.

The power control apparatus in this embodiment of this application may be an apparatus, or may be a component, an integrated circuit, or a chip in a terminal. The apparatus may be a mobile terminal or a non-mobile terminal. For example, the mobile terminal may include but is not limited to the type of the terminal 11 listed above. The mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The power control apparatus in this embodiment of this application may be an apparatus with an operating system. The operating system may be an Android (Android) operating system, may be an iOS operating system, or may be another possible operating system. This is not specifically limited in the embodiments of this application.

The power control apparatus provided in this embodiment of this application can implement the processes implemented by the method embodiment in FIG. 2, with the same technical effects achieved. To avoid repetition, details are not described herein again.

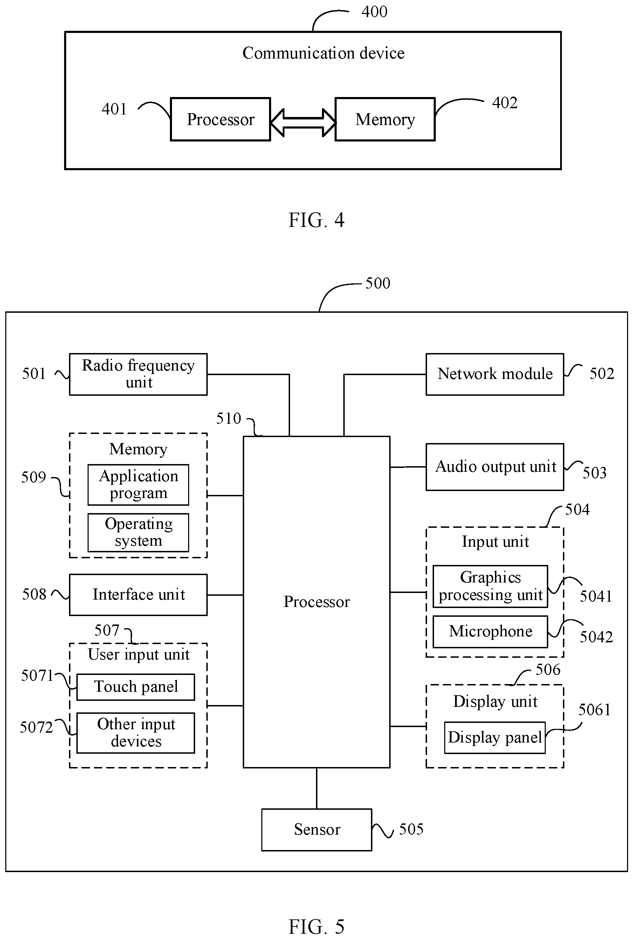

Optionally, as shown in FIG. 4, an embodiment of this application further provides a communication device 400, including a processor 401, a memory 402, and a program or instructions stored in the memory 402 and capable of running on the processor 401. For example, when the communication device 400 is a terminal, the program or instructions are executed by the processor 401 to implement the processes of the foregoing power control method embodiment applied to the first terminal device, with the same technical effects. To avoid repetition, details are not described herein again.

FIG. 5 is a schematic diagram of a hardware structure of a terminal device according to an embodiment of this application.

The terminal device 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal device 500 may further include a power supply (such as a battery) for supplying power to the components. The power supply may be logically connected to the processor 510 through a power management system. In this way, functions such as charge management, discharge management, and power consumption management are implemented by using the power management system. The structure of the terminal device shown in FIG. 5 does not constitute a limitation on the terminal. The terminal device may include more or fewer components than shown in the figure, or a combination of some components, or components disposed differently. Details are not described herein again.

It should be understood that, in this embodiment of this application, the input unit 504 may include a graphics processing unit (Graphics Processing Unit, GPU) 5041 and a microphone 5042. The graphics processing unit 5041 processes image data of a still picture or a video obtained by an image capture apparatus (for example, a camera) in a video capture mode or an image capture mode. The display unit 506 may include a display panel 5061. The display panel 5061 may be configured in a form of a liquid crystal display, an organic light-emitting diode, or the like. The user input unit 507 includes a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a functional button (such as a volume control button or a power on/off button), a trackball, a mouse, and a joystick. Details are not described herein.

In this embodiment of this application, the radio frequency unit 501 sends downlink data received from a network-side device to the processor 510 for processing, and in addition, sends uplink data to the network-side device. Generally, the radio frequency unit 501 includes but is not limited to an antenna, at least one amplifier, a transceiver, a coupler, a low noise amplifier, a duplexer, and the like.

The memory 509 may be configured to store software programs or instructions and various data. The memory 509 may mainly include a program or instruction storage area and a data storage area, where the program or instruction storage area may store an operating system, an application program or instructions required by at least one function (for example, an audio playing function and an image playing function), and the like. In addition, the memory 509 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, at least one magnetic disk storage device, a flash storage device, or another volatile solid-state storage device.

The processor 510 may include one or more processing units. Optionally, the processor 510 may integrate an application processor and a modem processor. The application processor mainly processes an operating system, a user interface, an application program or instructions, and the like. The modem processor mainly processes wireless communication, for example, a baseband processor. It can be understood that the modem processor may alternatively be not integrated into the processor 510.

The processor 510 is configured to: obtain a first path loss, where the first path loss is determined based on a sidelink SL path loss, or the first path loss is determined based on the SL path loss and a downlink DL path loss; and control a transmit power of a target transmission on a sidelink based on the first path loss.

In the terminal device provided in this embodiment of this application, the first path loss is obtained, where the first path loss is determined based on the sidelink SL path loss, or the first path loss is determined based on the SL path loss and the downlink DL path loss; and the transmit power of the target transmission on the sidelink is controlled based on the first path loss. In this embodiment of this application, the transmit power of the target transmission on the sidelink can be controlled based on the SL path loss, for example, in the case of unicast, a power is calculated based on an SL path loss between users, so that a power control manner matches a current communication scenario. This can improve accuracy of power control in an SL transmission scenario and avoid additional transmit power overheads, thereby saving energy.

Optionally, the processor 510 is configured to perform at least one of the following:

calculating the SL path loss based on a reference signal received power RSRP;
determining the SL path loss based on at least part of path losses transmitted by a second terminal device, where the second terminal device is a terminal device that communicates with the first terminal device;
determining the SL path loss based on a path loss notified of by a third terminal device, where the third terminal device is a scheduling terminal or a header user;
obtaining the SL path loss according to protocol specifications;
determining the SL path loss based on a path loss configured for a base station; and
determining the SL path loss based on a pre-configured path loss.

Optionally, the processor 510 is further configured to: calculate the SL path loss based on at least part of RSRPs transmitted by the second terminal device; or calculate the SL path loss based on an RSRP measured by the first terminal device and at least part of transmit powers of the second terminal device.

Optionally, the transmit power of the second terminal device is pre-configured; or

the transmit power of the second terminal device is transmitted by the second terminal device to the first terminal device; or
the transmit power of the second terminal device is notified by the third terminal device to the first terminal device.

Optionally, the processor 510 is further configured to perform at least one of the following:

randomly selecting N1 path losses from a first path loss set as the first path losses;
selecting the greatest N2 path losses from the first path loss set as the first path losses;
selecting the smallest N3 path losses from the first path loss set as the first path losses;
selecting an average value of at least two of the SL path losses as the first path loss;
selecting an average value of at least two of the DL path losses as the first path loss;
selecting an average value of the SL path loss and the DL path loss as the first path loss;
selecting, from the first path loss set, path losses corresponding to N4 transmissions having the longest or shortest remaining packet delay budgets PDBs as the first path losses;
selecting, from the first path loss set, path losses corresponding to N5 transmissions that satisfy a preset distance requirement or are in preset geographical locations as the first path losses;
selecting, from the first path loss set, a path loss corresponding to a transmission having a transmission priority lower than or equal to a first threshold as the first path loss;
selecting, from the first path loss set, a path loss corresponding to a transmission having a transmission priority higher than or equal to a second threshold as the first path loss;
selecting the SL path loss as the first path loss; and
selecting the DL path loss as the first path loss; where
the first path loss set includes at least one SL path loss and/or at least one DL path loss.

Optionally, the processor 510 is further configured to perform at least one of the following:

in a case that the number of resources included in a physical sidelink feedback channel PSFCH resource set is greater than a third threshold, selecting the SL path loss as the first path loss;
in a case that a resource interval for PSFCH transmission is greater than a fourth threshold, selecting the SL path loss as the first path loss;
selecting at least one SL path loss from an SL path loss set as the first path loss, where the SL path loss set includes at least two SL path losses, and a difference between any two SL path losses of the SL path loss set is less than a fifth threshold;
selecting an SL path loss corresponding to at least one transmit power of a first transmit power set as the first path loss, where the first transmit power set includes at least two transmit powers, a difference between any two transmit powers of the first transmit power set is less than a sixth threshold, and each transmit power corresponds to one SL path loss;
selecting an SL path loss corresponding to at least one PSD of a first power spectral density PSD set as the first path loss, where the first PSD set includes at least two PSDs, a difference between any two PSDs of the first PSD set is less than a seventh threshold, and each PSD corresponds to one SL path loss; and
in a case that there is no resource configuration for PSFCH code division multiplexing CDM or no resource configuration for specific CDM, selecting the SL path loss as the first path loss.

Optionally, N1, N2, N3, N4, or N5 is greater than 1 in a case that one of the following is satisfied:

the number of resources included in a PSFCH resource set is greater than an eighth threshold, where the resource set includes time-frequency domain resources corresponding to a preset slot and a preset sub-channel;
a resource interval for PSFCH transmission is greater than a ninth threshold;

a difference between any two path losses of a second path loss set is less than a tenth threshold, where the path loss set includes at least two path losses, and the at least two path losses are SL path losses and/or DL path losses; a difference between any two transmit powers of a second transmit power set is less than an eleventh threshold, where the second transmit power set includes at least two transmit powers, and each transmit power corresponds to one path loss; and
a difference between any two PSDs of a second PSD set is less than a twelfth threshold, where the first PSD set includes at least two PSDs, and each PSD corresponds to one path loss.

Optionally, the processor 510 is further configured to: in a case that the first path loss is the SL path loss, obtain a first parameter based on the first path loss;

obtain a target parameter based on at least one of the first parameter and a second parameter; and
control a transmit power of a target transmission on a sidelink based on the target parameter; where
the first parameter is calculated based on the SL path loss and a first SL power parameter value; and
the second parameter is calculated based on a first DL power parameter value in a case that the first DL power parameter value is provided.

Optionally, the processor 510 is further configured to: in a case that both the first parameter and the second parameter are present, obtain the target parameter by at least one of the following:

using the first parameter as the target parameter;
using the second parameter as the target parameter;
selecting a smaller one of the first parameter and the second parameter as the target parameter;
selecting a greater one of the first parameter and the second parameter as the target parameter;
using a sum of a first value and a second value as the target parameter, where the first value is a product of the first parameter and a first weight value, and the second value is a product of the second parameter and a second weight value; and
using an average value of the first parameter and the second parameter as the target parameter.

Optionally, the processor 510 is further configured to: in a case that the first SL power parameter value is provided, determine the first parameter as the target parameter; and/or
in a case that the first SL power parameter value is not provided and that the first DL power parameter value is provided, determine the second parameter as the target parameter.

Optionally, the processor 510 is further configured to: in a case that the first DL power parameter value is provided, determine the second parameter as the target parameter; and/or
in a case that the first DL power parameter value is not provided and that the first SL power parameter value is provided, determine the first parameter as the target parameter.

Optionally, the processor 510 is further configured to control, based on the first path loss, a transmit power of a sidelink synchronization signal block S-SSB/physical sidelink broadcast channel PSBCH transmission.

Optionally, the target transmission includes at least one transmission.

The controlling a transmit power of a target transmission on a sidelink based on the first path loss includes:

in a case that a total power of the target transmission determined based on the first path loss is greater than a first power of the first terminal device, discarding transmissions according to at least one of the following until the total power of the target transmission is less than or equal to the first power;
in a case that only a unicast or groupcast communication manner is present, randomly discarding M1 transmissions;
in a case that only a unicast or groupcast communication manner is present, discarding M2 transmissions having the highest or lowest priorities;
in a case that only a unicast or groupcast communication manner is present, discarding M3 transmissions having the greatest or smallest path losses;
in a case that only a unicast or groupcast communication manner is present, discarding M4 transmissions that satisfy a preset distance requirement or are in preset geographical locations;
in a case that only a unicast or groupcast communication manner is present, discarding M6 transmissions having the longest or shortest remaining PDBs;
in a case that only a unicast or groupcast communication manner is present, discarding a transmission having a transmission priority higher than a thirteenth threshold;
in a case that only a unicast or groupcast communication manner is present, discarding a transmission having a transmission priority lower than a fourteenth threshold;

in a case that both a unicast communication manner and a groupcast communication manner are present, selecting from unicast transmissions a transmission that needs to be discarded;

in a case that both a unicast communication manner and a groupcast communication manner are present, selecting from groupcast transmissions a transmission that needs to be discarded; and

in a case that both a unicast communication manner and a groupcast communication manner are present, selecting from all transmissions a transmission that needs to be discarded.

Optionally, the processor 510 is further configured to perform at least one of the following:

randomly discarding W1 transmissions;

discarding W2 transmissions having the highest or lowest priorities;

discarding W3 transmissions having the greatest or smallest path losses;

discarding W4 transmissions that satisfy a preset distance requirement or are in preset geographical locations;

discarding W5 transmissions having the longest or shortest remaining PDBs;

discarding a transmission having a transmission priority higher than a fifteenth threshold; and

discarding a transmission having a transmission priority lower than a sixteenth threshold.

In the terminal device provided in this embodiment of this application, the first path loss is obtained, where the first path loss is determined based on the sidelink SL path loss, or the first path loss is determined based on the SL path loss and the downlink DL path loss; and the transmit power of the target transmission on the sidelink is controlled based on the first path loss. In this embodiment of this application, the transmit power of the target transmission on the sidelink can be controlled based on the SL path loss, for example, in the case of unicast, a power is calculated based on an SL path loss between users, so that a power control manner matches a current communication scenario. This can improve accuracy of power control in an SL transmission scenario and avoid additional transmit power overheads, thereby saving energy.

An embodiment of this application further provides a readable storage medium, where the readable storage medium stores a program or instructions, and when the program or instructions are executed by a processor, the processes of the foregoing embodiment of the power control method are implemented, with the same technical effects achieved. To avoid repetition, details are not described herein again.

The processor is the processor in the terminal device in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface, where the communication interface is coupled to the processor, and the processor is configured to run a program or instructions to implement the processes of the foregoing embodiment of the power control method, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such process, method, article, or apparatus. In the absence of more restrictions, an element defined by "including a ..." does not exclude another same element in the process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings.

However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A power control method, applied to a first terminal device and comprising:

   obtaining a first path loss, wherein the first path loss is determined based on a sidelink SL path loss, or the first path loss is determined based on the SL path loss and a downlink DL path loss; and
   controlling a transmit power of a target transmission on a sidelink based on the first path loss.

2. The method according to claim 1, wherein the controlling a transmit power of a target transmission on a sidelink based on the first path loss comprises:
   controlling, based on the first path loss, a transmit power of a sidelink synchronization signal block S-SSB/physical sidelink broadcast channel PSBCH transmission.

3. The method according to claim 2, wherein the controlling, based on the first path loss, a transmit power of a sidelink synchronization signal block S-SSB transmission comprises:

   determining a transmit power $P_{S\text{-}SSB}(i)$ of the S-SSB transmission according to a formula

   $$P_{S-SSB}(\mathrm{i}) = \min \left( P_{CMAX},\ P_{0,\,S\text{-}SSB} + 10\log_{10}(2^{\mu} \bullet M_{RB}^{S\text{-}SSB}) + \alpha_{S\text{-}SSB} \bullet PL \right)$$ , wherein

   $P_{CMAX}$ is a maximum transmit power supported by a user;
   $P_{0,\,S\text{-}SSB}$ is a value of p0-DL-S-SSB configured; otherwise, $P_{S\text{-}SSB}(i) = P_{CMAX}$;
   $\alpha_{S\text{-}SSB}$ is a value of alpha-DL-S-SSB configured; otherwise, $\alpha_{S\text{-}SSB} = 1$ ; and
   $PL = PL_{b,f,c}(q_d)$ is a downlink path loss calculated using a reference signal with an index of $q_d$ for an activated downlink bandwidth part of a carrier f of a serving cell c.

4. The method according to claim 3, wherein a resource of the reference signal comprises:

   a resource determined by the first terminal device to be used for a transmission power of a PUSCH that is scheduled by a DCI format 0_0, in a case that the first terminal device is configured to monitor a PDCCH to detect for the DCI format 0_0; and/or
   a resource corresponding to an SS/PBCH block and used by the first terminal to obtain a MIB, in a case that the first terminal device is not configured to monitor the PDCCH to detect the DCI format 0_0.

5. The method according to claim 1, wherein the sidelink SL path loss is obtained by at least one of the following:

   calculating the SL path loss based on a reference signal received power RSRP;
   determining the SL path loss based on at least part of path losses transmitted by a second terminal device, wherein the second terminal device is a terminal device that communicates with the first terminal device;
   determining the SL path loss based on a path loss notified of by a third terminal device, wherein the third terminal device is a scheduling terminal or a header user;
   obtaining the SL path loss based on protocol specifications;
   determining the SL path loss based on a path loss configured for a base station; and
   determining the SL path loss based on a pre-configured path loss.

6. The method according to claim 5, wherein the calculating the SL path loss based on a reference signal received power RSRP comprises:

   calculating the SL path loss based on at least part of RSRPs transmitted by the second terminal device; or
   calculating the SL path loss based on an RSRP measured by the first terminal device and at least part of transmit powers of the second terminal device.

**7.** The method according to claim 6, wherein

the transmit power of the second terminal device is pre-configured; or
the transmit power of the second terminal device is transmitted by the second terminal device to the first terminal device; or
the transmit power of the second terminal device is notified by the third terminal device to the first terminal device.

**8.** The method according to claim 1, wherein determining the first path loss according to at least one of the SL path loss and the downlink DL path loss comprises at least one of the following:

randomly selecting N1 path losses from a first path loss set as the first path losses;
selecting the greatest N2 path losses from the first path loss set as the first path losses;
selecting the smallest N3 path losses from the first path loss set as the first path losses;
selecting an average value of at least two of the SL path losses as the first path loss;
selecting an average value of at least two of the DL path losses as the first path loss;
selecting an average value of the SL path loss and the DL path loss as the first path loss;
selecting, from the first path loss set, path losses corresponding to N4 transmissions having the longest or shortest remaining packet delay budgets PDBs as the first path losses;
selecting, from the first path loss set, path losses corresponding to N5 transmissions that satisfy a preset distance requirement or are in preset geographical locations as the first path losses;
selecting, from the first path loss set, a path loss corresponding to a transmission having a transmission priority lower than or equal to a first threshold as the first path loss;
selecting, from the first path loss set, a path loss corresponding to a transmission having a transmission priority higher than or equal to a second threshold as the first path loss;
selecting the SL path loss as the first path loss; and
selecting the DL path loss as the first path loss; wherein
the first path loss set comprises at least one SL path loss and/or at least one DL path loss.

**9.** The method according to claim 8, wherein the selecting the SL path loss as the first path loss comprises at least one of the following:

in a case that the number of resources comprised in a physical sidelink feedback channel PSFCH resource set is greater than a third threshold, selecting the SL path loss as the first path loss;
in a case that a resource interval for PSFCH transmission is greater than a fourth threshold, selecting the SL path loss as the first path loss;
selecting at least one SL path loss from an SL path loss set as the first path loss, wherein the SL path loss set comprises at least two SL path losses, and a difference between any two SL path losses of the SL path loss set is less than a fifth threshold;
selecting an SL path loss corresponding to at least one transmit power of a first transmit power set as the first path loss, wherein the first transmit power set comprises at least two transmit powers, a difference between any two transmit powers of the first transmit power set is less than a sixth threshold, and each transmit power corresponds to one SL path loss;
selecting an SL path loss corresponding to at least one PSD of a first power spectral density PSD set as the first path loss, wherein the first PSD set comprises at least two PSDs, a difference between any two PSDs of the first PSD set is less than a seventh threshold, and each PSD corresponds to one SL path loss; and
in a case that there is no resource configuration for PSFCH code division multiplexing CDM or no resource configuration for specific CDM, selecting the SL path loss as the first path loss.

**10.** The method according to claim 8, wherein N1, N2, N3, N4, or N5 is greater than 1 in a case that one of the following is satisfied:

the number of resources comprised in a PSFCH resource set is greater than an eighth threshold, wherein the resource set comprises time-frequency domain resources corresponding to a preset slot and a preset sub-channel;
a resource interval for PSFCH transmission is greater than a ninth threshold;
a difference between any two path losses of a second path loss set is less than a tenth threshold, wherein the path loss set comprises at least two path losses, and the at least two path losses are SL path losses and/or DL path losses;

a difference between any two transmit powers of a second transmit power set is less than an eleventh threshold, wherein the second transmit power set comprises at least two transmit powers, and each transmit power corresponds to one path loss; and

a difference between any two PSDs of a second PSD set is less than a twelfth threshold, wherein the first PSD set comprises at least two PSDs, and each PSD corresponds to one path loss.

11. The method according to claim 1, wherein in a case that the first path loss is the SL path loss, the controlling a transmit power of a target transmission on a sidelink based on the first path loss comprises:

obtaining a first parameter based on the first path loss;

obtaining a target parameter based on at least one of the first parameter and a second parameter; and

controlling the transmit power of the target transmission on the sidelink based on the target parameter; wherein the first parameter is calculated based on the SL path loss and a first SL power parameter value; and

the second parameter is calculated based on a first DL power parameter value in a case that the first DL power parameter value is provided.

12. The method according to claim 11, wherein the obtaining a target parameter based on at least one of the first parameter and a second parameter comprises:

in a case that both the first parameter and the second parameter are present, obtaining the target parameter by at least one of the following:

using the first parameter as the target parameter;

using the second parameter as the target parameter;

selecting a smaller one of the first parameter and the second parameter as the target parameter;

selecting a greater one of the first parameter and the second parameter as the target parameter;

using a sum of a first value and a second value as the target parameter, wherein the first value is a product of the first parameter and a first weight value, and the second value is a product of the second parameter and a second weight value; and

using an average value of the first parameter and the second parameter as the target parameter.

13. The method according to claim 11, wherein the obtaining a target parameter based on at least one of the first parameter and a second parameter comprises:

in a case that the first SL power parameter value is provided, determining the first parameter as the target parameter; and/or

in a case that the first SL power parameter value is not provided and that the first DL power parameter value is provided, determining the second parameter as the target parameter.

14. The method according to claim 11, wherein the obtaining a target parameter based on at least one of the first parameter and a second parameter comprises:

in a case that the first DL power parameter value is provided, determining the second parameter as the target parameter; and/or

in a case that the first DL power parameter value is not provided and that the first SL power parameter value is provided, determining the first parameter as the target parameter.

15. The method according to claim 1, wherein the target transmission comprises at least one transmission; and the controlling a transmit power of a target transmission on a sidelink based on the first path loss comprises:

in a case that a total power of the target transmission determined based on the first path loss is greater than a first power of the first terminal device, discarding transmissions according to at least one of the following until the total power of the target transmission is less than or equal to the first power;

in a case that only a unicast or groupcast communication manner is present, randomly discarding M1 transmissions;

in a case that only a unicast or groupcast communication manner is present, discarding M2 transmissions having the highest or lowest priorities;

in a case that only a unicast or groupcast communication manner is present, discarding M3 transmissions having the greatest or smallest path losses;

in a case that only a unicast or groupcast communication manner is present, discarding M4 transmissions that satisfy a preset distance requirement or are in preset geographical locations;

in a case that only a unicast or groupcast communication manner is present, discarding M5 transmissions having the longest or shortest remaining PDBs;

in a case that only a unicast or groupcast communication manner is present, discarding a transmission having a transmission priority higher than a thirteenth threshold;

in a case that only a unicast or groupcast communication manner is present, discarding a transmission having a transmission priority lower than a fourteenth threshold;

in a case that both a unicast communication manner and a groupcast communication manner are present, selecting from unicast transmissions a transmission that needs to be discarded;

in a case that both a unicast communication manner and a groupcast communication manner are present, selecting from groupcast transmissions a transmission that needs to be discarded; and

in a case that both a unicast communication manner and a groupcast communication manner are present, selecting from all transmissions a transmission that needs to be discarded.

16. The method according to claim 15, wherein the selecting a transmission that needs to be discarded comprises at least one of the following:

randomly discarding W1 transmissions;

discarding W2 transmissions having the highest or lowest priorities;

discarding W3 transmissions having the greatest or smallest path losses;

discarding W4 transmissions that satisfy a preset distance requirement or are in preset geographical locations;

discarding W5 transmissions having the longest or shortest remaining PDBs;

discarding a transmission having a transmission priority higher than a fifteenth threshold; and

discarding a transmission having a transmission priority lower than a sixteenth threshold.

17. A power control apparatus, applied to a first terminal device and comprising:

a first obtaining module, configured to obtain a first path loss, wherein the first path loss is determined based on a sidelink SL path loss, or the first path loss is determined based on the SL path loss and a downlink DL path loss; and

a control module, configured to control a transmit power of a target transmission on a sidelink based on the first path loss.

18. The apparatus according to claim 17, further comprising a second obtaining module, wherein
the second obtaining module is configured to perform at least one of the following:

calculating the SL path loss based on a reference signal received power RSRP;

determining the SL path loss based on at least part of path losses transmitted by a second terminal device, wherein the second terminal device is a terminal device that communicates with the first terminal device;

determining the SL path loss based on a path loss notified of by a third terminal device, wherein the third terminal device is a scheduling terminal or a header user;

obtaining the SL path loss based on protocol specifications;

determining the SL path loss based on a path loss configured for a base station; and

determining the SL path loss based on a pre-configured path loss.

19. The apparatus according to claim 18, wherein the first obtaining module is configured to: calculate the SL path loss based on at least part of RSRPs transmitted by the second terminal device; or
calculate the SL path loss based on an RSRP measured by the first terminal device and at least part of transmit powers of the second terminal device.

20. The apparatus according to claim 19, wherein

the transmit power of the second terminal device is pre-configured; or
the transmit power of the second terminal device is transmitted by the second terminal device to the first terminal device; or
the transmit power of the second terminal device is notified by the third terminal device to the first terminal device.

**21.** The apparatus according to claim 19, wherein the first obtaining module is configured to perform at least one of the following:

randomly selecting N1 path losses from a first path loss set as the first path losses;
selecting the greatest N2 path losses from the first path loss set as the first path losses;
selecting the smallest N3 path losses from the first path loss set as the first path losses;
selecting an average value of at least two of the SL path losses as the first path loss;
selecting an average value of at least two of the DL path losses as the first path loss;
selecting an average value of the SL path loss and the DL path loss as the first path loss;
selecting, from the first path loss set, path losses corresponding to N4 transmissions having the longest or shortest remaining packet delay budgets PDBs as the first path losses;
selecting, from the first path loss set, path losses corresponding to N5 transmissions having the shortest or longest communication distances as the first path losses;
selecting, from the first path loss set, path losses corresponding to N6 transmissions that satisfy a preset distance requirement or are in preset geographical locations as the first path losses;
selecting, from the first path loss set, a path loss corresponding to a transmission having a transmission priority lower than or equal to a first threshold as the first path loss;
selecting, from the first path loss set, a path loss corresponding to a transmission having a transmission priority higher than or equal to a second threshold as the first path loss;
selecting the SL path loss as the first path loss; and
selecting the DL path loss as the first path loss; wherein
the first path loss set comprises at least one SL path loss and/or at least one DL path loss.

**22.** The apparatus according to claim 21, wherein the first obtaining module is configured to perform at least one of the following:

in a case that the number of resources comprised in a physical sidelink feedback channel PSFCH resource set is greater than a third threshold, selecting the SL path loss as the first path loss;
in a case that a resource interval for PSFCH transmission is greater than a fourth threshold, selecting the SL path loss as the first path loss;
selecting at least one SL path loss from an SL path loss set as the first path loss, wherein the SL path loss set comprises at least two SL path losses, and a difference between any two SL path losses of the SL path loss set is less than a fifth threshold;
selecting an SL path loss corresponding to at least one transmit power of a first transmit power set as the first path loss, wherein the first transmit power set comprises at least two transmit powers, a difference between any two transmit powers of the first transmit power set is less than a sixth threshold, and each transmit power corresponds to one SL path loss;
selecting an SL path loss corresponding to at least one PSD of a first power spectral density PSD set as the first path loss, wherein the first PSD set comprises at least two PSDs, a difference between any two PSDs of the first PSD set is less than a seventh threshold, and each PSD corresponds to one SL path loss; and
in a case that there is no resource configuration for PSFCH code division multiplexing CDM or no resource configuration for specific CDM, selecting the SL path loss as the first path loss.

**23.** The apparatus according to claim 21, wherein N1, N2, N3, N4, or N5 is greater than 1 in a case that one of the following is satisfied:

the number of resources comprised in a PSFCH resource set is greater than an eighth threshold, wherein the resource set comprises time-frequency domain resources corresponding to a preset slot and a preset sub-channel;
a resource interval for PSFCH transmission is greater than a ninth threshold;
a difference between any two path losses of a second path loss set is less than a tenth threshold, wherein the path loss set comprises at least two path losses, and the at least two path losses are SL path losses and/or DL path losses;
a difference between any two transmit powers of a second transmit power set is less than an eleventh threshold, wherein the second transmit power set comprises at least two transmit powers, and each transmit power corresponds to one path loss; and
a difference between any two PSDs of a second PSD set is less than a twelfth threshold, wherein the first PSD set comprises at least two PSDs, and each PSD corresponds to one path loss.

**24.** The apparatus according to claim 17, wherein in a case that the first path loss is the SL path loss, the control module comprises:

a first obtaining submodule, configured to obtain a first parameter based on the first path loss;
a second obtaining submodule, configured to obtain a target parameter based on at least one of the first parameter and a second parameter; and
a control submodule, configured to control a transmit power of a target transmission on a sidelink based on the target parameter; wherein
the first parameter is calculated based on the SL path loss and a first SL power parameter value; and
the second parameter is calculated based on a first DL power parameter value in a case that the first DL power parameter value is provided.

**25.** The apparatus according to claim 24, wherein the second obtaining submodule is configured to: in a case that both the first parameter and the second parameter are present, obtain the target parameter by at least one of the following:

using the first parameter as the target parameter;
using the second parameter as the target parameter;
selecting a smaller one of the first parameter and the second parameter as the target parameter;
selecting a greater one of the first parameter and the second parameter as the target parameter;
using a sum of a first value and a second value as the target parameter, wherein the first value is a product of the first parameter and a first weight value, and the second value is a product of the second parameter and a second weight value; and
using an average value of the first parameter and the second parameter as the target parameter.

**26.** The apparatus according to claim 25, wherein the second obtaining submodule comprises:

a first obtaining unit, configured to: in a case that the first SL power parameter value is provided, determine the first parameter as the target parameter; and/or
in a case that the first SL power parameter value is not provided and that the first DL power parameter value is provided, determine the second parameter as the target parameter.

**27.** The apparatus according to claim 25, wherein the second obtaining submodule comprises:

a second obtaining unit, configured to: in a case that the first DL power parameter value is provided, determine the second parameter as the target parameter; and/or
in a case that the first DL power parameter value is not provided and that the first SL power parameter value is provided, determine the first parameter as the target parameter.

**28.** The apparatus according to claim 17, wherein the control module is configured to control, based on the first path loss, a transmit power of a sidelink synchronization signal block S-SSB/physical sidelink broadcast channel PSBCH transmission.

**29.** The apparatus according to claim 17, wherein the target transmission comprises at least one of the following transmissions:
the control module is configured to perform at least one of the following:

in a case that a total power of the target transmission determined based on the first path loss is greater than a first power of the first terminal device, discarding transmissions according to at least one of the following until the total power of the target transmission is less than or equal to the first power;
in a case that only a unicast or groupcast communication manner is present, randomly discarding M1 transmissions;
in a case that only a unicast or groupcast communication manner is present, discarding M2 transmissions having the highest or lowest priorities;
in a case that only a unicast or groupcast communication manner is present, discarding M3 transmissions having the greatest or smallest path losses;
in a case that only a unicast or groupcast communication manner is present, discarding M4 transmissions that satisfy a preset distance requirement or are in preset geographical locations;
in a case that only a unicast or groupcast communication manner is present, discarding M5 transmissions having the longest or shortest remaining PDBs;

in a case that only a unicast or groupcast communication manner is present, discarding a transmission having a transmission priority higher than a thirteenth threshold;

in a case that only a unicast or groupcast communication manner is present, discarding a transmission having a transmission priority lower than a fourteenth threshold;

in a case that both a unicast communication manner and a groupcast communication manner are present, selecting from unicast transmissions a transmission that needs to be discarded;

in a case that both a unicast communication manner and a groupcast communication manner are present, selecting from groupcast transmissions a transmission that needs to be discarded; and

in a case that both a unicast communication manner and a groupcast communication manner are present, selecting from all transmissions a transmission that needs to be discarded.

30. The apparatus according to claim 29, wherein the control module is specifically configured to perform at least one of the following:

randomly discarding W1 transmissions;

discarding W2 transmissions having the highest or lowest priorities;

discarding W3 transmissions having the greatest or smallest path losses;

discarding W4 transmissions that satisfy a preset distance requirement or are in preset geographical locations;

discarding W5 transmissions having the longest or shortest remaining PDBs;

discarding a transmission having a transmission priority higher than a fifteenth threshold; and

discarding a transmission having a transmission priority lower than a sixteenth threshold.

31. A terminal device, comprising a processor, a memory, and a program or instructions stored in the memory and capable of running on the processor, wherein when the program or instructions are executed by the processor, the steps of the power control method according to any one of claims 1 to 16 are implemented.

32. A readable storage medium, wherein the readable storage medium stores a program or instructions, and when the program or instructions are executed by a processor, the steps of the power control method according to any one of claims 1 to 16 are implemented.

12

Network-side device

11

11

Terminal

Terminal

FIG. 1

```
                          ┌─────────────┐
                          │    Start    │
                          └──────┬──────┘
                                 │
                                 ▼
┌───────────────────────────────────────────────────────────────┐
│ Obtain a first path loss, where the first path loss is         │        201
│ determined based on a sidelink SL path loss, or the first path │
│ loss is determined based on the SL path loss and a downlink    │
│ DL path loss                                                   │
└───────────────────────────────┬───────────────────────────────┘
                                 │
                                 ▼
┌───────────────────────────────────────────────────────────────┐
│ Control a transmit power of a target transmission on a         │        202
│ sidelink based on the first path loss                          │
└───────────────────────────────┬───────────────────────────────┘
                                 │
                                 ▼
                          ┌─────────────┐
                          │     End     │
                          └─────────────┘
```

FIG. 2

```
┌─────────────────────────────────────────────┐
│         Power control apparatus             │      300
│                                             │
│   ┌─────────────────────────────────────┐   │
│   │       First obtaining module        │   │      301
│   └─────────────────────────────────────┘   │
│                                             │
│   ┌─────────────────────────────────────┐   │
│   │           Control module            │   │      302
│   └─────────────────────────────────────┘   │
└─────────────────────────────────────────────┘
```

FIG. 3

400

Communication device

401  Processor ⟷ Memory  402

FIG. 4

500

501  Radio frequency unit

Network module  502

510

Memory
509
Application program
Operating system

Audio output unit  503

504
Input unit
Graphics processing unit  5041
Microphone  5042

508  Interface unit

507
User input unit
5071  Touch panel
5072  Other input devices

Processor

506
Display unit  5061
Display panel

Sensor  505

FIG. 5

## INTERNATIONAL SEARCH REPORT

International application No.

**PCT/CN2021/121770**

### A. CLASSIFICATION OF SUBJECT MATTER

H04W 52/24(2009.01)i

According to International Patent Classification (IPC) or to both national classification and IPC

### B. FIELDS SEARCHED

Minimum documentation searched (classification system followed by classification symbols)

H04L; H04Q7/-; H04W; H04B

Documentation searched other than minimum documentation to the extent that such documents are included in the fields searched

Electronic data base consulted during the international search (name of data base and, where practicable, search terms used)

VEN, CNTXT, CNABS, WOTXT, EPTXT, PATENTICS, 3GPP: 功率控制, 功控, 边链路, 侧链路, 副链路, 旁链路, 发送功率, 路损, 路径损耗, 下行, 单播, 组播, 广播, TPC, SL, DL, control, sidelink, downlink, transmission, power, path, loss, multicast, V2X, V2D

### C. DOCUMENTS CONSIDERED TO BE RELEVANT

| Category* | Citation of document, with indication, where appropriate, of the relevant passages | Relevant to claim No. |
|---|---|---|
| PX | CN 112399372 A (HUAWEI TECHNOLOGIES CO., LTD.) 23 February 2021 (2021-02-23) abstract, and claims 1-25 | 1, 17 |
| X | CN 110753390 A (CHINA ACADEMY OF INFORMATION AND COMMUNICATIONS TECHNOLOGY) 04 February 2020 (2020-02-04) abstract, and claims 1-21 | 1, 17 |
| A | CN 110753390 A (CHINA ACADEMY OF INFORMATION AND COMMUNICATIONS TECHNOLOGY) 04 February 2020 (2020-02-04) abstract, and claims 1-21 | 2-16, 18-32 |
| A | WO 2020096693 A1 (CONVIDA WIRELESS L.L.C.) 14 May 2020 (2020-05-14) entire document | 1-32 |

☐ Further documents are listed in the continuation of Box C.   ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **12 December 2021** | **22 December 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/121770**

| Patent document cited in search report | | | Publication date (day/month/year) | Patent family member(s) | | | Publication date (day/month/year) |
|---|---|---|---|---|---|---|---|
| CN | 112399372 | A | 23 February 2021 | WO | 2021027900 | A1 | 18 February 2021 |
| CN | 110753390 | A | 04 February 2020 | | None | | |
| WO | 2020096693 | A1 | 14 May 2020 | CN | 112997546 | A | 18 June 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011065169